(19) Europäisches Patentamt
European Patent Office
Office européen des brevets

(11) **EP 4 295 033 B1**

(12) **FASCICULE DE BREVET EUROPEEN**

(45) Date de publication et mention de la délivrance du brevet:
**02.04.2025 Bulletin 2025/14**

(21) Numéro de dépôt: **22705826.0**

(22) Date de dépôt: **16.02.2022**

(51) Classification Internationale des Brevets (IPC):
**F03D 3/02** (2006.01)

(52) Classification Coopérative des Brevets (CPC):
**F03D 3/02;** F05B 2240/212; F05B 2240/37;
Y02E 10/72; Y02E 10/727; Y02E 10/74

(86) Numéro de dépôt international:
**PCT/EP2022/053753**

(87) Numéro de publication internationale:
**WO 2022/175301 (25.08.2022 Gazette 2022/34)**

(54) **EOLIENNE À FLUX TRANSVERSE À PALES JUMELLES, ET À AXES DE ROTATION INCLINÉS**

QUERSTROMWINDTURBINE MIT ZWEI SCHAUFELN UND GENEIGTEN DREHACHSEN

CROSS-FLOW WIND TURBINE WITH TWIN BLADES AND INCLINED ROTATION AXES

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **18.02.2021 FR 2101609**

(43) Date de publication de la demande:
**27.12.2023 Bulletin 2023/52**

(73) Titulaire: **Collaborative Energy**
**38340 Voreppe (FR)**

(72) Inventeurs:
• **ACHARD, Jean-Luc**
**38340 VOREPPE (FR)**
• **CUSSAC, Sébastien**
**38340 VOREPPE (FR)**

(74) Mandataire: **INNOV-GROUP**
**209 Avenue Berthelot**
**69007 Lyon (FR)**

(56) Documents cités:
FR-A1- 2 973 843        JP-A- 2003 120 510
JP-A- S59 190 482        US-A1- 2020 217 297
US-B1- 7 189 051

## Description

## DOMAINE TECHNIQUE

Le domaine technique de l'invention est les éoliennes à flux transverse.

## ART ANTERIEUR

Les énergies renouvelables connaissent un développement important. De ce fait, les installations d'éoliennes de grande taille, sur terre ou en mer, ont connu une forte croissance durant les dernières décennies. La plupart des éoliennes installées sont des éoliennes horizontales (HAWT : Horizontal Axis Wind Turbine - éolienne à axe horizontal), l'axe de rotation étant parallèle à la direction du vent incident.

D'autres types d'éoliennes comprennent des turbines à flux transverse, dont l'axe de rotation est perpendiculaire à la direction du vent incident. L'axe de rotation est généralement vertical. Ce type d'éolienne est usuellement désigné (VAWT : Vertical Axis Wind Turbine - éolienne à axe vertical).

Des éoliennes dont l'axe de rotation est vertical ont été décrites dans JP 59190482, FR2973843 ainsi que US7189051. Il s'agit d'éoliennes de type Savonius.

Parmi les éoliennes à flux transverse, les éoliennes de type Darrieus peuvent comporter des pales rectilignes ou des pales courbées. Les éoliennes verticales à pales courbées comportent des pales s'étendant autour d'un arbre de rotation central, vertical, ce dernier formant également un pylône. Ce type d'éolienne a connu un développement modeste, en raison d'une réputation de fragilité, en particulier pour les éoliennes de grande hauteur. Contrairement à une éolienne horizontale, une éolienne verticale de grande hauteur est soumise à des vents stables, en hauteur, mais également, plus proche du sol, à une zone, dite « couche limite », propice à l'apparition de turbulences. Il en résulte une certaine sensibilité à la fatigue.

Afin d'améliorer la rigidification, une éolienne verticale à pale courbe, de grande hauteur, peut être rigidifiée par des câbles s'étendant entre le sommet de l'éolienne et le sol. Mais il en résulte une forte augmentation de l'emprise au sol, ce qui est particulièrement préjudiciable à une installation en mer. De plus, les câbles appliquent une contrainte de pression, en direction du sol, sur les roulements permettant la rotation de l'arbre. Cela nécessite le recours à des roulements particulièrement robustes, ce qui augmente la complexité et le coût de l'éolienne.

En outre, la présence d'un arbre de rotation, massif, au centre de chaque pale, génère des turbulences (tourbillons de Karman), affectant les performances de l'éolienne. Enfin, lors de la rotation des pales, sous l'effet de forces aérodynamiques cycliques, l'arbre de rotation central et les câbles de maintien peuvent subir des vibrations, pouvant engendrer des instabilités résonnantes, en particulier lorsque la hauteur de l'arbre central ou la longueur des câbles est importante.

A l'heure actuelle, la majorité des éoliennes de fortes puissances sont des éoliennes horizontales. Cependant, leurs inconvénients sont multiples : la génératrice, produisant de l'électricité sous l'effet de la rotation des pales, est suspendue sur une nacelle, et portée à une grande hauteur. Il en est de même des principaux organes de transmission et de commande, de type boite de vitesse, freins, contrôle commande. De ce fait, la nacelle, disposée en hauteur, supporte un poids important, ce qui est préjudiciable à la stabilité, du fait d'une sensibilité élevée au tangage ou au roulis. Afin de compenser ces inconvénients, le mât supportant la nacelle et les pales sont massifs, de même que les fondations supportant l'ensemble, sur terre ou en mer. La disposition en hauteur de la nacelle complique également les opérations de maintenance. Un autre inconvénient des éoliennes horizontales est la taille des pales, très élevée, ce qui, combinée à la taille du mât, complique à la fois le transport et l'installation. Et cela d'autant plus que le pales sont fabriquées d'un seul tenant. Ces pales sont généralement lourdes, ce qui entraîne une sollicitation gravitationnelle élevée de l'éolienne. Les pales peuvent également présenter des formes complexes, ce qui augmente leur coût.

Des éoliennes verticales avec turbine de type Darrieus à pales rectilignes ont également été proposées. Un avantage notable des éoliennes verticales est la possibilité de disposer la génératrice et la chaine de transmission électromécanique à faible hauteur, contrairement aux éoliennes à axe horizontal. Un autre avantage est une la sensibilité à toutes les directions de vent, ce qui ne nécessite pas le recours à une régulation de l'orientation en lacet de l'éolienne. De plus, une éolienne à pale rectiligne présente une emprise au sol réduite, et est moins sensible aux différences de vitesse du vent en fonction de la hauteur.

Le document US2020/0217297 décrit une éolienne comportant différentes turbines à axe vertical, de type Darrieus, à pales courbes. Les turbines sont distantes les unes des autres, et reliées à une génératrice à l'aide de d'arbres horizontaux de grande longueur. Il en résulte une éolienne encombrante, présentant une forte emprise au sol.

Le document WO2017153676 décrit une éolienne comportant des turbines jumelles à axe vertical, de type Darrieus à pales rectilignes, les turbines étant symétriques l'une par rapport à l'autre, par rapport à un plan vertical médian. Les turbines contrarotatives, sont maintenues par un mât médian, à partir de l'extrémité supérieur duquel s'étendent deux supports horizontaux perpendiculaires au plan médian. Les pales verticales de chaque turbine sont prolongées à leurs extrémités par des bras horizontaux profilés, tournant autour d'un axe de rotation vertical. D'une façon générale, le rendement élevé d'une turbine en situation gémellaire par rapport à une situation isolée est lié à un effet de confinement latéral partiel qui se manifeste lorsque les pales évoluent dans la zone inter-turbines. En effet, dans cette zone, le plan médian vertical entre les turbines contrarotatives empêche l'écoulement incident de se détourner des turbines. Deux conditions doivent être néanmoins vérifiées : il faut qu'elles tournent à la même vitesse et dans une même relation de position angulaire. Synchroniser les deux turbines revient à imposer ces deux conditions. En revanche les pales peuvent remonter au vent dans ladite zone (sens refoulant) ou descendre le vent (sens aspirant).

Cependant, ce type de conception présente un inconvénient lié aux forces centrifuges s'exerçant sur les pales verticales des turbines, durant la rotation. Sous l'effet des forces centrifuges, les pales verticales sont soumises à des contraintes de flexion, tendant à dilater latéralement les turbines, c'est-à-dire à augmenter le diamètre. Il en résulte des vibrations indésirables, qui affectent l'efficacité. Par ailleurs, les bras horizontaux des turbines de grande taille subissent une déformation vers le bas, liée au poids des pales verticales qui se manifeste lorsque les turbines sont à l'arrêt, la force centrifuge ne compensant plus la gravité. Il en résulte des effets de fatigue au niveau des jonctions bras / pales.

Enfin, des forces aérodynamiques cycliques agissant sur les parties verticales, que ce soit dans le sens aspirant ou refoulant, rompent périodiquement la symétrie de chaque pale. Les forces aérodynamiques sont orientées vers l'intérieur de la turbine lorsqu'une pale verticale remonte au vent, et vers l'extérieur de la turbine lorsque la pale évolue dans le sens contraire. Il en résulte une dissymétrie cyclique, générant des oscillations au cours de chaque rotation.

La gémellité des turbines permet une augmentation du rendement de l'éolienne. Toutefois, il en résulte une certaine complexité liée à l'utilisation de deux génératrices, chaque génératrice étant relié à une turbine. Les génératrices sont asservies par un système électronique de puissance pour synchroniser les turbines, ce qui entraîne un surcoût et la nécessité de procéder à des recalages réguliers.

Par ailleurs, la structure de maintien des turbines est propice à l'apparition de contraintes en flexion, ce qui peut entraîner l'apparition de vibrations. Cela peut également entraîner une usure prématurée de la structure.

Les inventeurs proposent une éolienne visant à éviter ou réduire les inconvénients listés ci-dessus.

## EXPOSE DE L'INVENTION

Un objet de l'invention est une éolienne, comportant des turbines jumelles à flux transverse, reliées à une génératrice, la génératrice comportant un arbre configuré pour être entraîné en rotation sous l'effet d'une rotation des turbines, l'éolienne comportant :

- une première turbine, mobile en rotation autour d'un premier axe de rotation, la première turbine comportant plusieurs pales réparties autour du premier axe de rotation ;
- une deuxième turbine, mobile en rotation autour d'un deuxième axe de rotation, la deuxième turbine comportant plusieurs pales réparties autour du deuxième axe de rotation ;
- le premier axe de rotation et le deuxième axe de rotation étant de préférence symétriques l'un de l'autre par rapport à un axe vertical ;
- le premier axe de rotation et le deuxième axe de rotation sont inclinés par rapport à l'axe vertical, selon un angle d'inclinaison, et de préférence un même angle d'inclinaison compris entre 25° et 50 .

Avantageusement, l'éolienne définit un plan médian, le plan médian :

- étant perpendiculaire à un plan aval, le plan aval comportant le premier axe de rotation et le deuxième axe de rotation;
- passant par un point d'intersection du premier axe de rotation et du deuxième axe de rotation ;

Le plan médian peut former un plan de symétrie de l'éolienne. Le plan médian peut notamment être vertical. Il en est de même du plan aval.

Avantageusement, chaque axe de rotation converge vers une unique génératrice, de façon que l'arbre de la génératrice, de préférence horizontal, soit entraîné en rotation par la première turbine et par la deuxième turbine ;

De préférence,

- chaque turbine s'étend, autour d'un axe de rotation, entre une extrémité inférieure et une extrémité supérieure, l'extrémité inférieure étant plus proche de la génératrice que ne l'est l'extrémité supérieure ;
- l'extrémité inférieure et l'extrémité supérieure de chaque turbine sont alignées sur l'axe de rotation de ladite turbine ;
- chaque pale d'une turbine comporte :

  - une partie inférieure, s'étendant à partir de l'extrémité inférieure ;
  - une partie supérieure, s'étendant à partir de l'extrémité supérieure ;

- chaque pale s'étendant, de l'extrémité inférieure vers l'extrémité supérieure, de telle sorte que:

  - le long de la partie inférieure, lorsqu'une distance par rapport à l'extrémité inférieure augmente, un rayon de la pale, correspondant à une distance entre la pale et l'axe de rotation, augmente progressivement ;
  - le long la partie supérieure, lorsqu'une distance par rapport à l'extrémité supérieure diminue, le rayon de la pale diminue progressivement.

Avantageusement,

- au niveau de l'extrémité inférieure, la partie inférieure forme un angle d'ouverture inférieur avec l'axe de rotation , l'angle d'ouverture inférieur étant aigu;
- au niveau de l'extrémité supérieure, la partie supérieure forme un angle d'ouverture supérieur avec l'axe de rotation, l'angle d'ouverture supérieur étant aigu.

De préférence, l'angle d'ouverture supérieur et l'angle d'ouverture inférieur sont égaux et forment un même angle d'ouverture. L'angle d'ouverture peut être compris entre 40° et 60°. De préférence, chaque pale est telle que la partie inférieure est rectiligne et/ou la partie supérieure est rectiligne.

Selon un mode de réalisation,

- chaque pale comporte une partie équatoriale, reliant la partie inférieure et la partie supérieure ;
- dans la partie équatoriale, le rayon de la pale atteint un rayon maximal.

Selon un mode de réalisation,:

- la hauteur de chaque pale correspond à une distance entre l'extrémité inférieure et l'extrémité supérieure, parallèlement à l'axe de rotation ;
- chaque pale présente un facteur de forme, correspondant à un ratio entre la hauteur de la pale sur deux fois le rayon maximal de la pale;
- le facteur de forme de chaque pale est compris entre 1,3 et 1,5.

De préférence,

- la partie équatoriale est courbe;
- le long de la partie équatoriale, à partir de la partie inférieure, le rayon augmente progressivement, jusqu'à atteindre le rayon maximal de la pale, puis diminue progressivement, jusqu'à la partie supérieure.

Selon une possibilité, pour chaque turbine :

- un plan équatorial s'étend, perpendiculairement à l'axe de rotation, le plan équatorial passant par le rayon maximum de chaque pale de la turbine ;
- le plan équatorial forme un plan de symétrie de la turbine.

Chaque pale peut comporter :

- une jonction inférieure, correspondant à une jonction entre la partie inférieure et la partie équatoriale ;
- une jonction supérieure, correspondant à une jonction entre la partie supérieure et la partie équatoriale ;

chaque pale étant telle que :

- la distance entre la jonction inférieure et la jonction supérieure, parallèlement à l'axe -de rotation, forme une hauteur de la partie équatoriale;
- une hauteur relative de la partie équatoriale correspond à un ratio entre la hauteur de la partie équatoriale et la hauteur de la pale;
- la hauteur relative de chaque pale est supérieure à 0.5 et inférieure à 0.8.

Selon un mode de réalisation :

- deux pales appartenant à deux turbines différentes sont, au cours de leur rotation autour de leurs axes de rotation respectifs, écartées d'un écartement minimal;
- un facteur de forme de l'éolienne correspond à un ratio entre l'écartement minimal et deux fois le rayon maximal ;
- le facteur de forme de l'éolienne est compris entre 0.1 et 0.3.

Selon un mode de réalisation, chaque turbine comporte deux pales, chaque pale étant symétrique l'une de l'autre par rapport à l'axe de rotation de la turbine. Selon un autre mode de réalisation, chaque turbine comporte trois pales, régulièrement réparties autour de l'axe de rotation de la turbine.

De préférence,

- la première turbine est reliée :

  • au niveau de son extrémité inférieure, à un premier arbre de rotation inférieur;
  • au niveau de son extrémité supérieure, à un premier arbre de rotation supérieur ;
  • le premier arbre de rotation inférieur, le premier arbre de rotation supérieur et le premier axe de rotation étant coaxiaux ;

- la deuxième turbine est reliée :

  • au niveau de son extrémité inférieure, à un deuxième arbre de rotation inférieur;
  • au niveau de son extrémité supérieure, à un deuxième arbre de rotation supérieur;
  • le deuxième arbre de rotation inférieur, le deuxième arbre de rotation supérieur et le deuxième axe de rotation étant coaxiaux ;

- l'éolienne comporte une structure de maintien, la structure de maintien comportant :

  • une nacelle, supportant la génératrice ;
  • un mât, s'étendant verticalement à partir de la nacelle, le mât étant centré par rapport au plan médian, le mât étant décalé par rapport au plan aval, d'une distance de recul, selon une direction longitudinale perpendiculaire au plan aval;

- un premier bras supérieur s'étendant à partir du mât, jusqu'à un premier support supérieur, le premier support supérieur maintenant le premier arbre de rotation supérieur ;
- un deuxième bras supérieur s'étendant à partir du mât, jusqu'à un deuxième support supérieur, le deuxième support supérieur maintenant le deuxième arbre de rotation supérieur ;
- le premier bras supérieur et le deuxième bras supérieur étant inclinés par rapport à un axe vertical.

Selon une possibilité,

- le premier support supérieur comporte un roulement, dans lequel est inséré le premier arbre de rotation supérieur;
- le deuxième support supérieur comporte un roulement, dans lequel est inséré le deuxième arbre de rotation supérieur.

La structure de maintien peut également comporter :

- un poinçon, s'étendant à partir du mât, en s'éloignant du plan aval ;
- un premier hauban, s'étendant entre le poinçon et le premier bras supérieur ;
- un deuxième hauban, s'étendant entre le poinçon et le deuxième bras supérieur.

Selon une possibilité,

- le premier hauban s'étend entre le poinçon et le premier support supérieur ;
- le deuxième hauban s'étend entre le poinçon et le deuxième support supérieur.

Selon un mode de réalisation, le premier bras supérieur et le deuxième bras supérieur comportent des bras élémentaires successifs, s'étendant respectivement vers le premier support supérieur et le deuxième support supérieur, chaque bras élémentaire étant d'autant plus incliné, par rapport à la verticale, qu'il est proche du premier support supérieur ou du deuxième support supérieur.

Selon un mode de réalisation, au moins une jambe de force s'étend entre le mât et la nacelle, la jambe de force étant inclinée par rapport à la verticale, et s'étendant, à partir du mât, en se rapprochant du plan aval.

Selon un mode de réalisation, la nacelle est mobile en rotation, autour d'un axe de rotation vertical, autour duquel s'étend le mât, de telle sorte que sous l'effet d'un vent, soufflant selon une direction, les turbines se placent spontanément en aval du mât, selon ladite direction, sous l'effet d'une poussée exercée par le vent sur chaque turbine. Selon un autre mode de réalisation, la nacelle est fixe en rotation, l'éolienne étant telle que les turbines sont disposées en aval du mât, selon une direction correspondant à une direction dominante selon laquelle le vent souffle Selon un mode de réalisation, dans lequel chaque arbre de rotation inférieur est relié à l'arbre de la génératrice par un renvoi d'angle.

Selon un mode de réalisation, dans lequel un frein est disposé entre chaque renvoi d'angle et chaque extrémité inférieure respective de chaque turbine. Chaque frein peut comporte un disque, solidaire de la turbine, et une mâchoire, solidaire du renvoi d'angle.

Selon un mode de réalisation, au moins une entretoise s'étend entre deux pales différentes d'une même turbine. La jonction entre l'entretoise et les deux pales peut former un congé de raccordement. Selon une possibilité, deux pales différentes d'une même turbine sont reliées par une entretoise supérieure et une entretoise inférieure, disposées respectivement plus proches de l'extrémité supérieure et de l'extrémité inférieure de la turbine que du plan équatorial. Selon un mode de réalisation, le mât présente une section horizontale s'étendant, parallèlement au plan médian $P_m$, entre une extrémité amont convexe et une extrémité aval, en se rapprochant du plan aval $P_a$. La section horizontale du mât peut avantageusement s'effiler entre l'extrémité amont et l'extrémité avale.

Selon un mode de réalisation, chaque bras présente une section verticale profilée, s'étendant entre un bord d'attaque et un bord de fuite, le bord de fuite étant orienté vers le plan aval.

L'invention sera mieux comprise à la lecture de l'exposé des exemples de réalisation présentés, dans la suite de la description, en lien avec les figures listées ci-dessous.

**FIGURES**

La figure 1A est une vue d'ensemble d'un exemple de réalisation d'une éolienne, comportant deux pales.
La figure 1B est une vue de côté de l'éolienne représentée sur la figure 1A.
La figure 1C est une vue en aval de l'éolienne représentée sur la figure 1A
La figure 2A est une vue d'une turbine de l'éolienne représentée sur les figures précédentes.
Les figures 2B est une vue de la turbine s'étendant dans un plan aval de l'éolienne.
La figure 2C est un détail de la figure 2B.
La figure 3A est une vue de dessus de l'éolienne décrite en lien avec les figures précédentes.
Les figures 3B et 3C détaillent une structure d'un support supérieur de l'éolienne.

La figure 3D est similaire à la figure 3A. La figure 3D schématise des forces s'exerçant dans un plan horizontal, au niveau du support supérieur.

La figure 4 est une vue en amont de l'éolienne décrite dans les figures précédentes.

La figure 5A montre une configuration de l'éolienne dans laquelle chaque turbine comporte trois pales.

Les figures 5B et 5C montrent un profil possible de bras formant la structure de maintien de l'éolienne.

La figure 5D est une autre représentation de l'éolienne de la figure 5A.*

Les figures 5E et 5F montrent des variantes selon lesquelles le mât présente une section horizontale adaptée à un fonctionnement selon un mode refoulant (figure 5E) ou aspirant (figure 5F).

La figure 6A montre une entretoise adaptée à une turbine comportant trois pales par turbine.

La figure 6B est un détail de la figure 6A.

La figure 6C montre une entretoise adaptée à une turbine comportant deux pales par turbine.

Les figures 6D et 6E illustrent le recours à une pièce d'interface, permettant un assemblage d'une entretoise avec une pale.

Les figures 7A et 7B schématisent la transmission mécanique entre chaque pale et la génératrice.

Les figures 8A et 8B sont d'autres modes de réalisation d'une éolienne.

## EXPOSE DE MODES DE REALISATION PARTICULIERS

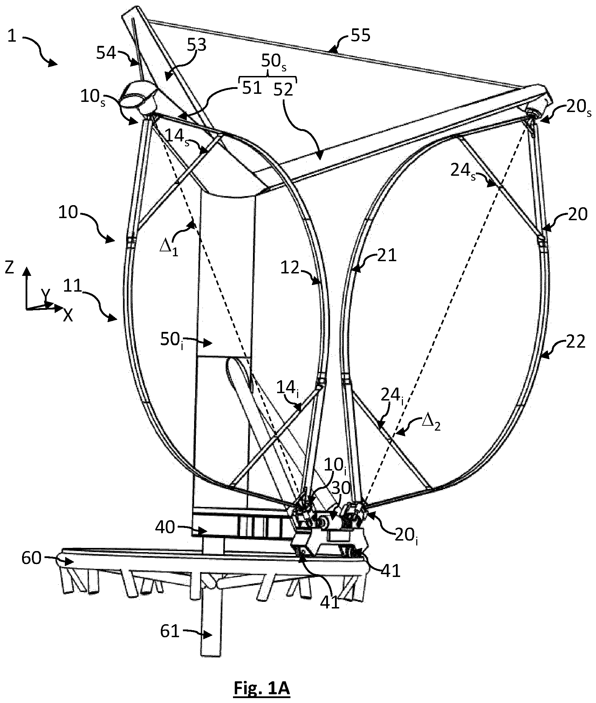

Les figures 1A à 1C représentent des vues d'un exemple d'éolienne selon l'invention. L'éolienne comporte une première turbine 10 et une deuxième turbine 20, de type Darrieus à pales **courbes,** à flux transverse. La première turbine 10 est mobile en rotation autour d'un premier axe de rotation $\Delta_1$. La deuxième turbine 20 est mobile en rotation autour d'un deuxième axe de rotation $\Delta_2$. Le premier axe de rotation et le deuxième axe de rotation sont coplanaires. Ils appartiennent à un même plan vertical $P_a$, dit plan aval. La désignation « plan aval » correspond au fait que le plan est situé en aval par rapport à la structure de maintien de l'éolienne, décrite par la suite. Le terme aval est à interpréter en considérant l'écoulement du vent à travers l'éolienne. Dans le plan aval, le premier axe de rotation $\Delta_1$ et le deuxième axe de rotation $\Delta_2$ sont inclinés, selon un même angle d'inclinaison $\alpha$, par rapport à un axe vertical Z. Le plan aval $P_a$ est vertical.

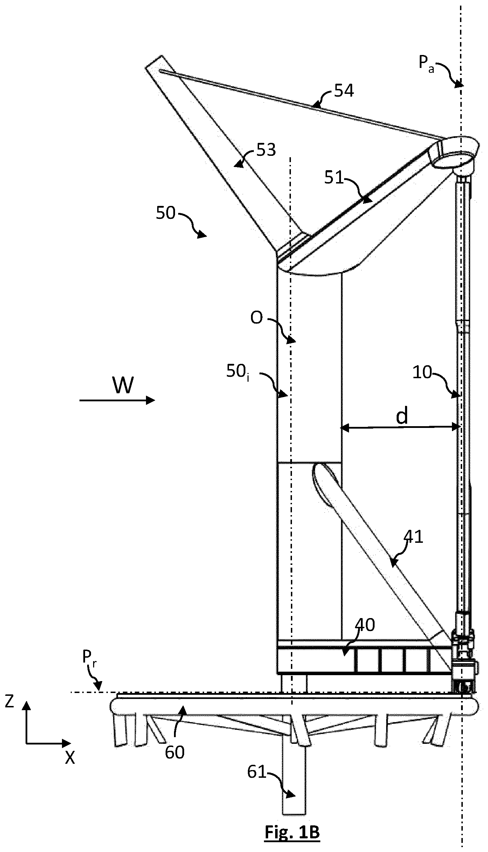

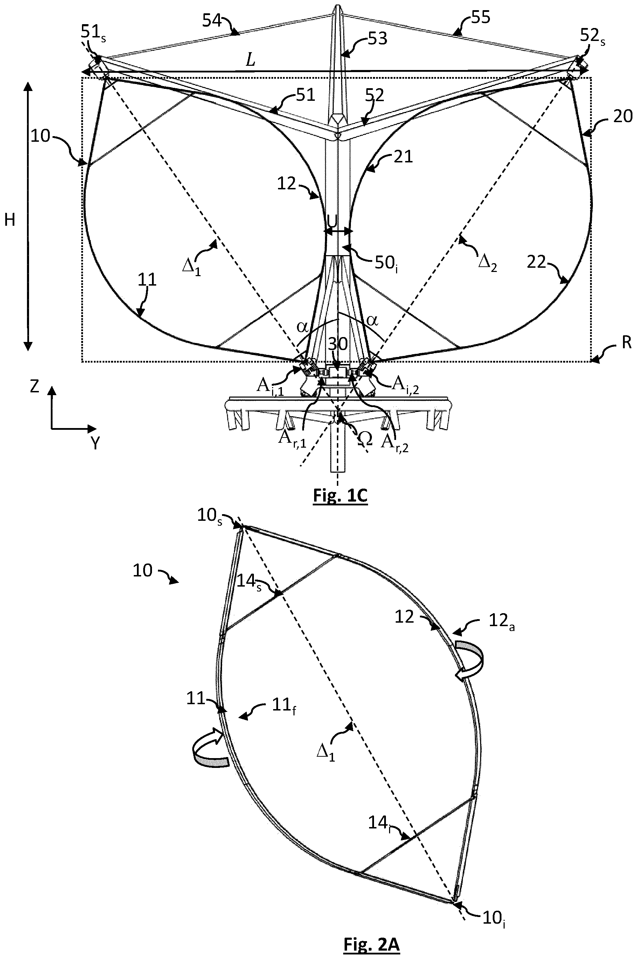

Par turbine à flux transverse, il est entendu que la turbine entre en rotation sous l'effet d'un vent soufflant transversalement à chaque axe de rotation. Dans le cas présent, le plan aval $P_a$ est de préférence disposé perpendiculairement à la direction du vent W. La figure 1B est une vue de côté, perpendiculairement au plan aval $P_a$. La figure 1C est une vue, en amont, de l'éolienne, parallèlement au plan aval $P_a$.

Le premier axe de rotation $\Delta_1$ et le deuxième axe de rotation $\Delta_2$ convergent en un point d'intersection $\Omega$, situé à égale distance de chaque turbine. Le plan perpendiculaire au plan aval $P_a$ et passant par le point d'intersection $\Omega$, forme un plan médian $P_m$ de l'éolienne. La première turbine 10 et la deuxième turbine 20 sont agencées symétriquement de part et d'autre du plan médian $P_m$, ce dernier formant un plan de symétrie. Ainsi, la première turbine et la deuxième turbine sont jumelles, au sens où elles sont symétriques l'une de l'autre par rapport au plan médian. Le plan médian $P_m$ est un plan vertical. On verra par la suite que le plan médian $P_m$ forme également un plan de symétrie d'une structure de maintien 50 maintenant chaque turbine.

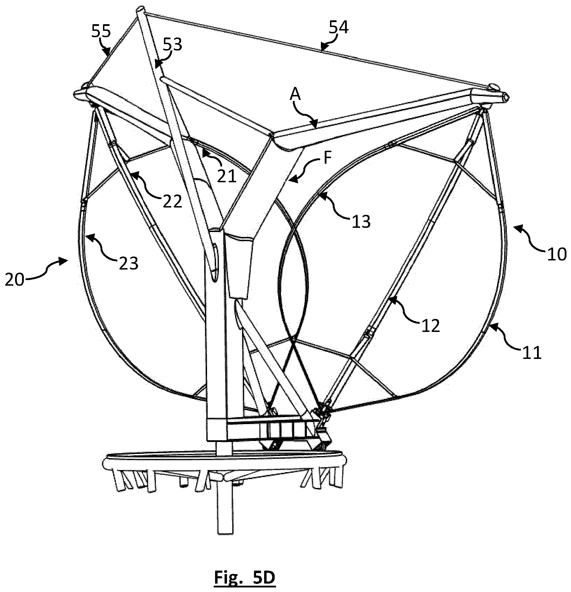

Chaque turbine comporte au moins deux pales, et de préférence deux ou trois pales. Dans l'exemple représenté sur les figures 1A à 1C, chaque turbine comporte deux pales : la première turbine 10 comporte une première pale 11 et une deuxième pale 21, tandis que la deuxième turbine 20 comporte une première pale 21 et une deuxième pale 22. De préférence, les pales sont agencées de telle sorte que la première turbine 10 et la deuxième turbine 20 sont contrarotatives. Des exemples de turbines à trois pales sont décrits par la suite, en lien avec la figure 5D.

La première turbine 10 s'étend entre une première extrémité inférieure $10_i$ et une première extrémité supérieure $10_s$, situées sur le premier axe de rotation $\Delta_1$. La deuxième turbine 20 s'étend entre une deuxième extrémité inférieure $20_i$ et une deuxième extrémité supérieure $20_s$, situées sur le deuxième axe de rotation $\Delta_2$.

L'éolienne comporte une génératrice 30, configurée pour produire de l'électricité sous l'effet de la rotation des turbines. Les premier et deuxième axes de rotation convergent vers la même génératrice 30. La génératrice 30 comporte un rotor, qui est entraîné à la fois par la première turbine 10 et la deuxième turbine 20. Dans l'exemple représenté, la génératrice comporte un premier arbre de rotation récepteur $A_{r,1}$ et un deuxième arbre de rotation récepteur $A_{r,2}$, s'étendant de part et d'autre de la génératrice 30. Les premier et deuxième arbres de rotation récepteurs $A_{r,1}$, $A_{r,2}$ transmettent respectivement une rotation de la première turbine 10 et de la deuxième turbine 20 au rotor de la génératrice 30. Les turbines peuvent être refoulantes (i-e remontant au vent lorsque les pales sont situées à proximité du mât) ou aspirantes (i-e descendant au vent lorsque les pales sont situées à proximité du mât).

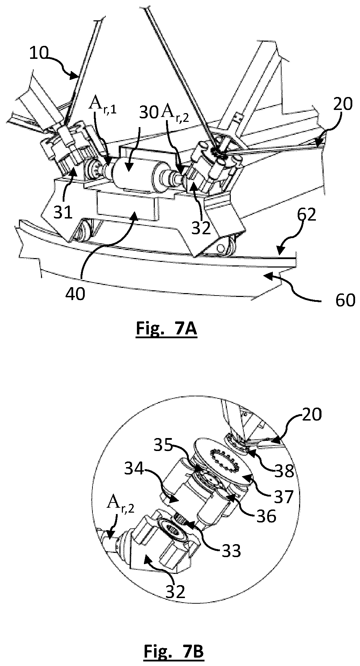

La première turbine 10 est reliée à premier un arbre de rotation inférieur $A_{i,1}$, s'étendant entre la première extrémité inférieure $10_i$ jusqu'au premier arbre de rotation récepteur $A_{r,1}$ de la génératrice 30, via un renvoi d'angle. De façon symétrique, la deuxième turbine 20 est reliée à un deuxième arbre de rotation inférieur $A_{i,2}$, s'étendant entre la deuxième extrémité inférieure $20_i$ jusqu'au deuxième arbre de rotation récepteur $A_{r,2}$ de la génératrice, via un système de renvoi d'angle. Chaque arbre de rotation inférieur $A_{i,1}$, $A_{i,2}$ est respectivement maintenu au niveau de chaque extrémité inférieure par une liaison pivot. Chaque arbre de rotation inférieur a une action motrice, transmise aux arbres récepteurs $A_{r,1}$, $A_{r,2}$ de la génératrice par les renvois d'angle. Les arbres récepteurs de la génératrice sont mécaniquement couplés à un unique arbre moteur de la génératrice, ce dernier s'étendant de part et d'autre de la génératrice. L'arbre moteur de la génératrice est ainsi simultanément entraîné en rotation par les deux turbines 10 et 20, ce qui constitue un aspect remarquable de l'invention. Des détails de la chaîne de transmission mécanique, entre chaque extrémité inférieure et la génératrice, sont décrits en lien avec les figures 7A à 7B.

La conception de l'éolienne, visant à entraîner simultanément une unique génératrice par deux turbines 10, 20, tournant autour de deux axes de rotations convergents, permet d'obtenir une synchronisation mécanique des turbines. L'entraînement de la même génératrice par plusieurs turbines permet de réduire le coût de l'éolienne, en réduisant le nombre de génératrices à utiliser. De plus, cela évite de recourir à des systèmes de synchronisation électroniques pour synchroniser plusieurs génératrices, ce qui est nécessite des recalages réguliers, comme décrit dans l'art antérieur.

La génératrice peut être une génératrice asynchrone à cage d'écureuil, une génératrice à vitesse variable avec multiplicateur, une génératrice synchrone avec multiplicateur dite à réluctance (sans aimant permanent à terres rares) ou une génératrice synchrone à entraînement direct. Il peut également s'agir d'un autre type de génératrice.

Outre la synchronisation mécanique, la convergence des axes de rotation vers la génératrice permet l'utilisation d'une génératrice compacte, centrée par rapport au plan médian.

Description des turbines

Comme précédemment décrit, l'angle d'inclinaison $\alpha$ de chaque axe de rotation, par rapport à la verticale, est de préférence compris entre 25° et 50°, et de préférence entre 30° et 40°, par exemple 35°. De telles plages angulaires permettent d'obtenir un bon compromis entre la hauteur H, selon laquelle s'étendent les turbines, selon la direction verticale (axe Z), et la largeur $L$ selon laquelle s'étendent les turbines dans la direction horizontale. La largeur des turbines $L$ est définie parallèlement à un axe latéral Y, perpendiculaire au plan médian $P_m$. Les inventeurs estiment que la hauteur H selon laquelle s'étendent les turbines, selon la direction verticale, doit être optimisée de façon à être suffisante pour augmenter le maître couple, mais suffisamment faible de façon à exploiter une couche de vent dans laquelle la vitesse du vent puisse être considérée comme homogène. Par ailleurs, la limitation de la hauteur permet de maintenir le centre de gravité de l'éolienne à un niveau suffisamment bas. La hauteur H est typiquement de quelques mètres à plus d'une centaine de mètres , par exemple comprise entre 5m et 150m. La hauteur $H$ et la largeur $L$ sont liées par l'angle d'inclinaison $\alpha$.

L'inclinaison des axes de rotation permet d'augmenter la largeur $L$ de l'éolienne. Afin de maximiser le maître couple de l'éolienne, il est préférable d'optimiser la surface occupée par chaque turbine à l'intérieur d'un périmètre rectangulaire R de hauteur $H$ et de largeur $L$. Le périmètre R est représenté par un contour rectangulaire en pointillés sur la figure 1C. Le périmètre R n'a pas d'existence matérielle. Il s'agit d'un rectangle virtuel. Afin d'optimiser le remplissage, c'est-à-dire la surface délimitée par chaque turbine à l'intérieur du périmètre, la forme des pales peut être optimisée comme décrit ci-après.

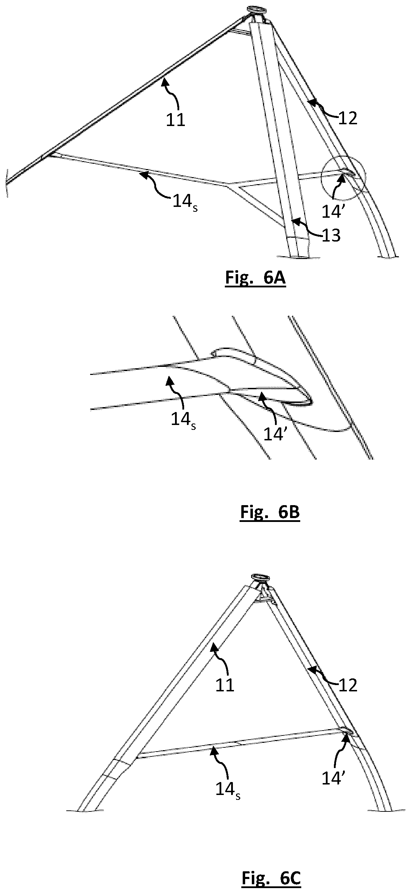

La figure 2A représente la première pale 11 et la deuxième pale 12 de la première turbine 10. Sur la figure 2A, on distingue un bord d'attaque $12_a$ de la deuxième pale 12 et un bord de fuite $11_f$ de la première pale 11. La première pale comporte une entretoise supérieure $14_s$ et une entretoise inférieure $14_i$. Les entretoises s'étendent, perpendiculairement au premier axe de rotation $\Delta_1$, entre chaque pale. Les entretoises ont pour fonction une rigidification de la turbine. Le recours à des entretoises est optionnel. Il peut être réservé aux turbines de grandes dimensions. De façon analogue, la deuxième turbine 20 comporte une entretoise inférieure $24_i$ et une entretoise supérieure $24_s$. Une forme préférée d'entretoises est décrite en lien avec les figures 6A à 6E.

Chaque pale s'étend entre l'extrémité inférieure $10_i$ et l'extrémité supérieure $10_s$ de la turbine 10, en se rapprochant d'une courbe de type troposkine, c'est-à-dire une courbe formée par une corde tournant à vitesse angulaire constante autour d'un axe de rotation. Plus on se rapproche d'une forme troposkine, plus les contraintes exercées au niveau de chaque pale sont des contraintes en traction, ce qui minimise les contraintes en flexion. Comme indiqué dans l'art antérieur, des contraintes en flexion appliquées à une pale d'une turbine engendrent des vibrations indésirables, nuisant au fonctionnement et aux performances de l'éolienne. En privilégiant l'application de contraintes en traction, on réduit, voire élimine, le risque d'apparition de vibrations indésirables lorsque la pale tourne autour de son axe de rotation. Sous l'effet d'une rotation de la turbine, chaque pale subit une force centrifuge, qui a tendance à élargir la turbine. Il en résulte une contrainte en traction s'appliquant le long de chaque pale, entre les deux extrémités inferieures $10_i$, $20_i$ et supérieures $10_s$, $20_s$.

Lorsque la forme de chaque pale tend vers une courbe troposkine, chaque turbine, formée par une association de plusieurs pales identiques, régulièrement réparties, présente une forme effilée.

Contrairement aux turbines de forme troposkine construites dans l'art antérieur, on note que chaque turbine ne comporte pas d'arbre central, coaxial de l'axe de rotation, entre l'extrémité supérieure $10_s$ et l'extrémité inférieure $10_i$.

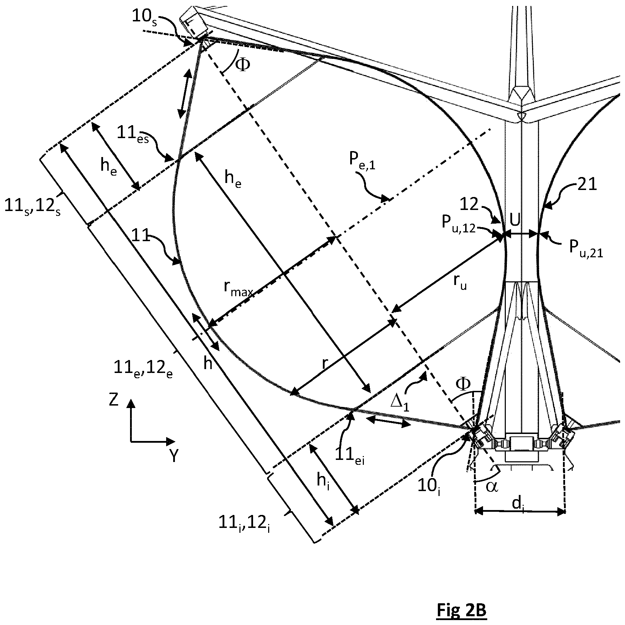

La figure 2B est un détail de la première turbine 10. Dans cet exemple, la première pale 11 est symétrique de la deuxième pale 12 par rapport au premier axe de rotation $\Delta_1$. Dans la suite de la description, la distance entre un point d'une pale et l'axe de rotation est désignée par le terme « rayon ». Chaque pale comporte une partie inférieure $11_i$, $12_i$, s'étendant à partir de l'extrémité inférieure $10_i$, selon une hauteur inférieure $h_i$, cette dernière étant déterminée parallèlement à l'axe de rotation. Le long de la partie inférieure $11_i$ (ou $12_i$) lorsque la distance par rapport à l'extrémité inférieure $10_i$ augmente, le rayon (c'est-à-dire la distance entre la pale et l'axe de rotation), augmente progressivement. De préférence, le rayon de chaque pale est maximal à mi-hauteur (parallèlement à l'axe de rotation), c'est-à-dire à égale distance de l'extrémité inférieure et de l'extrémité supérieure. Chaque pale comporte une partie supérieure $11_s$, $12_s$, s'étendant à partir de l'extrémité supérieure $10_s$ selon une hauteur supérieure $h_s$, cette dernière étant déterminée parallèlement à l'axe de rotation. De façon similaire, le long de la partie supérieure $11_s$ (ou $12_s$), au fur et à mesure que l'on se rapproche de l'extrémité supérieure $10_s$, le rayon diminue.

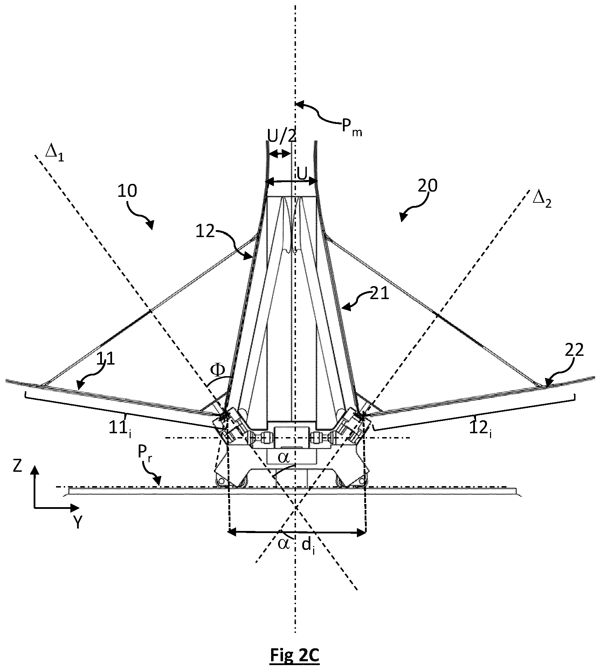

Dans l'exemple représenté, les parties inférieure et supérieure de chaque pale sont rectilignes. Les parties inférieure et supérieure sont inclinées, par rapport au premier axe de rotation, selon un même angle d'ouverture inférieur et un angle d'ouverture supérieur. Dans l'exemple représenté, l'angle d'ouverture inférieur est égal à l'angle d'ouverture supérieur, ce qui correspond à un mode de réalisation préféré. Par la suite, l'angle d'ouverture inférieur et supérieur est indifféremment désigné angle d'ouverture $\Phi$. L'angle d'ouverture $\Phi$ est un angle aigu. Lorsque les parties inférieure et supérieure de chaque pale sont rectilignes, le rayon augmente linéairement en fonction d'une distance par rapport à l'extrémité inférieure (ou supérieure), et de $\sin(\Phi)$. L'angle d'ouverture $\Phi$ est représenté sur les figures 2B et 2C.

Selon une alternative, l'angle d'ouverture supérieur est plus élevé que l'angle d'ouverture inférieur. Selon cette possibilité, l'angle d'ouverture inférieur est plus faible, pour des raisons d'encombrement. L'angle d'ouverture supérieur est plus élevé, de façon à augmenter le couple dans la partie supérieure de la pale.

Dans l'exemple représenté, chaque pale 11, 12 comporte une partie équatoriale $11_e$, $12_e$, s'étendant entre la partie inférieure et la partie supérieure de ladite pale. Dans l'exemple représenté, la partie équatoriale est courbe. Le long de la partie équatoriale $11_e$, à partir d'une jonction inférieure $11_{ei}$, avec la partie inférieure $11_i$, le rayon r de la pale augmente progressivement jusqu'à atteindre un rayon maximal $r_{max}$, puis diminue jusqu'à une jonction supérieure $11_{es}$ avec la partie supérieure $11_s$. La succession d'une partie inférieure rectiligne, d'une partie équatoriale courbe et d'une partie supérieure rectiligne correspond à une structure dite SCS, acronyme de (Straight Curved Straight, signifiant rectiligne - courbé - rectiligne).

On peut définir un plan équatorial, perpendiculaire à l'axe de rotation, et passant par un point de chaque pale, correspondant au rayon maximal. La turbine est de préférence symétrique par rapport au plan équatorial. Sur la figure 2B, on a représenté une trace du plan équatorial $P_{e,1}$ de la première turbine 10. Le rayon maximal de chaque pale se trouve alors à la mi-hauteur $h_e/2$ de la partie équatoriale, la mi-hauteur étant déterminée parallèlement à l'axe de rotation. Dans l'exemple représenté, du fait de la symétrie de chaque pale par rapport au plan équatorial, le rayon maximal de chaque pale se trouve à mi-hauteur $h/2$ de la pale, la mi-hauteur étant déterminée parallèlement à l'axe de rotation.

Comme précédemment indiqué, la forme ainsi obtenue se rapproche d'une courbe troposkine. Lorsque la pale tourne autour de son axe de rotation, les principales contraintes s'exerçant sur cette dernière sont des contraintes en traction, représentées par des doubles flèches le long de la pale 11 sur la figure 2B. Sous l'effet d'une rotation, chaque pale est maintenue en tension entre les extrémités supérieure et inférieure, d'où la référence à une courbe troposkine. Plus la vitesse angulaire de la pale est élevée, plus la tension de la pale augmente. De ce fait, les contraintes de flexion, qui affectent les éoliennes décrites dans l'art antérieur, sont réduites, au profit de contraintes de traction.

Afin d'optimiser la surface délimitée par chaque turbine, à l'intérieur du périmètre rectangulaire R décrit en lien avec la figure 1C, il est préférable que l'angle d'ouverture $\Phi$ soit suffisamment élevé. De préférence, l'angle d'ouverture $\Phi$ est compris entre 40° et 50°, par exemple 45°. Cela permet d'obtenir un « remplissage » optimal au niveau de chaque turbine. Le remplissage correspond à la surface délimitée par chaque turbine relativement à l'aire du périmètre R.

Les turbines 10 et 20 sont symétriques l'une par rapport à l'autre, par rapport au plan médian $P_m$. Au cours de chaque rotation, deux pales respectives de chaque turbine s'approchent l'une de l'autre jusqu'à un écartement U minimal, ce dernier étant représenté sur la figure 1C et la figure 2B. Afin d'optimiser le remplissage précédemment défini, il est souhaitable de minimiser l'écartement U, de façon à réduire l'espace libre entre les deux turbines. Cependant, d'autres contraintes imposent de ne pas diminuer l'écartement U en deçà d'une valeur minimale, pour des raisons de sécurité ou de performances : il s'agit notamment de risques structurels, ou d'influence trop importante d'une turbine sur l'autre, conduisant à des oscillations indésirables. Plus l'angle d'ouverture $\Phi$ augmente, plus l'écartement minimal U diminue également. Si $d_i$ correspond à une distance entre les deux extrémités inférieures $10_i$, $20_i$, parallèlement à l'axe latéral Y, lorsque $\alpha = \Phi$, $U = d_i$. Lorsque $\Phi > \alpha$, $U < d_i$ : on réduit alors l'écartement minimal U. On comprend que l'écartement minimal U dépend de $d_i$, et des angles $\alpha$ et $\Phi$. D'une façon générale, il est préférable que : $0.6\Phi \leq \alpha \leq \Phi$. Dans l'exemple représenté, $\alpha = 35°$ et $\Phi = 45°$, d'où $\alpha = 0.78 \Phi$.

L'écartement U quantifie un espace libre entre les turbines que l'on caractérise par la distance entre deux points $P_u$, dits points de rapprochement, respectivement situés sur les pales de chaque turbine. Le point de rapprochement d'une pale d'une turbine correspond au point le plus proche d'une pale de l'autre turbine, lorsque les deux pales respectives de chaque turbine sont en vis-à-vis. La distance entre deux points de rapprochement respectifs de deux pales respectives de deux turbines correspond à l'écartement U. De préférence, le point de rapprochement $P_u$ d'une turbine est placé au niveau de la partie équatoriale $11_e$ de la turbine. En effet, c'est dans la partie équatoriale qu'une pale est considérée comme étant la plus productive. Sur la figure 2B, on a représenté les points de rapprochement $P_{u,12}$ et $P_{u,21}$ des pales 12 et 21 respectivement.

Soit $r_u$, le rayon d'une pale au niveau du point de rapprochement $P_u$. Le rayon $r_u$ correspond à une distance, perpendiculairement à l'axe de rotation de la pale, entre l'axe de rotation et le point de rapprochement. Sur la figure 2B, on a représenté le rayon $r_u$ de pale 12. Le rayon $r_u$ est le même pour l'ensemble des pales des deux turbines.

Afin d'optimiser le remplissage et d'augmenter les performances de l'éolienne, il est souhaitable de minimiser l'écartement U tout en réduisant la distance $d_i$. Cependant, d'autres contraintes imposent de ne pas diminuer l'écartement U en deçà d'une valeur minimale, pour des raisons de sécurité. Des problèmes structurels pourraient alors apparaitre, notamment suite à des phénomènes de résonnance de toute la structure de maintien, causés par des variations brutales du vent ou encore suite à des oscillations longitudinales des pales, causées par bouffées turbulentes locales du vent. Les inventeurs considèrent que

$$0,1 \; < \; \frac{U}{2r_u} \; < \; 0,2.$$

Sur l'exemple la figure 2B, $\frac{U}{2r_u} = 0,12$.

On note que le demi-écartement U/2 correspond à une distance la plus proche entre les pales d'une turbine et le plan médian $P_m$, comme représenté sur la figure 2C.

Relativement à l'angle d'ouverture $\Phi$ et l'angle d'inclinaison $\alpha$, l'inégalité suivante doit ainsi être respectée :

$$\alpha < \Phi$$

Afin de s'éloigner d'une configuration où les axes des turbines seraient verticaux, configuration peu favorable au remplissage précédemment défini, il est préférable que il est préférable que $0,6\Phi \leq \alpha$.

Outre un meilleur remplissage du périmètre rectangulaire R, la réduction de l'espace libre entre les turbines s'accompagne d'un confinement de l'écoulement incident de part et d'autre du plan médian $P_m$. Par écoulement incident, on entend l'écoulement de l'air en amont de chaque turbine. Le terme « confinement » est usuellement désigné par le terme anglais « blockage ». Cet effet de confinement de l'écoulement incident est ainsi mis à profit dans une partie particulièrement productive de la pale qui se trouve au niveau de l'écartement minimal U qui sépare les deux parties équatoriales des deux pales, comme représenté dans la figure 2B. Il est estimé que le rapprochement de pales, remontant au vent, de deux turbines différentes conduit à une augmentation du rendement pouvant atteindre 10% par rapport à une situation dans laquelle chaque turbine serait isolée l'une de l'autre.

Afin d'augmenter un rendement de chaque turbine, les inventeurs considèrent une hauteur $h_e$ de chaque partie équatoriale $11_e$, $12_e$ de chaque pale, relativement à la hauteur de chaque pale. Ainsi, chaque partie équatoriale peut être caractérisée par une hauteur relative $\Gamma$, telle que

$$\Gamma = \frac{h_e}{h}$$

où :

- $h_e$ est la hauteur de la partie équatoriale de chaque pale, parallèlement à l'axe de rotation de la pale.
- $h$ est la hauteur de chaque pale, c'est-à-dire la distance, parallèlement à l'axe de rotation de la pale, entre l'extrémité inférieure et l'extrémité supérieure.

Il est préférable que $\Gamma \geq 0.5$, comme décrit dans la publication W.Tjiu, T. Marnoto, S.Mat , M. H.Ruslan, K.Sopian « Darrieus vertical axis wind turbine for power generation I: Assessment of Darrieus VAWT configurations », Renewable Energy 75 (2015) 50-67

De préférence, $0.5 \leq \Gamma \leq 0.8$. Par exemple, $\Gamma = 0.6$.

La hauteur relative $\Gamma$ définit une proportion relative de la partie équatoriale courbe de chaque pale.

On peut également définir un facteur de forme $\delta$ de chaque pale, de telle sorte que

$$\delta = \frac{h}{2r_{max}}$$

où

- $h$ est la hauteur de chaque pale parallèlement à l'axe de rotation ;
- $r_{max}$ est le rayon maximal de la pale.

Lorsque la pale tourne autour de l'axe de rotation, la grandeur $2r_{max}$ correspond au diamètre décrit par la turbine, dans le plan équatorial.

Il est préférable que $1.3 \leq \delta \leq 1.5$.

Lorsque $\Gamma = 0.6$ et $\Phi = 45°$, on peut montrer que $\delta = 1.4$, en utilisant :

$$\delta = \frac{sin(2\,\Phi)}{2} \left[ sin^2(\Phi) - \Gamma(1 - cos\Phi) \right]$$

Le facteur de forme $\delta$ croît avec $\Gamma$. Lorsque $\Gamma$ est constant, le facteur de forme diminue lorsque $\Phi$ augmente, car plus $\Phi$ augmente, plus $r_{max}$ augmente également.

On peut définir un facteur de forme $\Lambda$ de l'éolienne, tel que

$$\Lambda = \frac{U}{2r_{max}}$$

Ce facteur de forme est un ratio entre l'écartement minimal U entre deux pales de deux turbines différentes et deux fois le rayon maximal défini par chaque pale. Il est préférable que $0.05 \leq \Lambda \leq 0.3$. ou $0.1 \leq \Lambda \leq 0.3$ Dans l'exemple représenté, $\Lambda = 0.12$.

On comprend de ce qui précède que la géométrie de chaque pale résulte d'une optimisation de la hauteur relative $\Gamma$ de la partie équatoriale (ratio $\frac{h_e}{h}$), d'un facteur de forme $\delta$ de chaque pale (ratio $\frac{h}{2r_{max}}$), et un facteur de forme $\Lambda$ de l'éolienne (ratio $\frac{U}{2r_{max}}$) de façon à optimiser le rendement de l'éolienne.

## Description de la structure de maintien

L'éolienne comporte une structure de maintien 50 pour supporter les pales précédemment décrites. Comme représenté sur la figure 1A à 1C, la structure de maintien s'étend à partir d'une nacelle 40, supportant la génératrice 30. Dans le mode de réalisation représenté sur les figures 1A à 1C, la nacelle 40 est mobile en rotation autour d'un support fixe 60. Le support 60 est disposé au sommet d'un pilier 61.

Le pilier 61 s'étend verticalement à partir d'un socle sur lequel repose l'éolienne. Le socle peut être ménagé sur la terre. Le socle peut également être ménagé en mer, en étant installé sur une barge flottante. En eaux peu profondes, le socle peut être relié au fond de la mer. Le pilier 61 permet de disposer les turbines 10, 20 à une hauteur dépassant une couche limite, décrite dans l'art antérieur. Par couche limite, il est entendu une couche, s'étendant à partir du socle, dans laquelle le vent n'est pas uniforme, et peut être soumis à des irrégularités dues à la topographie environnant le socle. La couche limite est propice à l'apparition de turbulences, ce qui peut entraîner un phénomène de fatigue. Le pilier 61 permet une surélévation des turbines 10, 20, en dessus de la couche limite. Les turbines sont ainsi exposées à un vent plus uniforme. Dans les applications en environnement marin, pour lesquelles une éolienne selon l'invention convient particulièrement, la hauteur du pilier 61 peut être comprise entre 5m et 50m. Le recours à une forme turbine effilée, comme décrit ci-avant, favorise un rehaussement de la partie équatoriale, la plus productrice, de façon que cette dernière soit située en dessus de la couche limite, tout en limitant la hauteur du pilier 61. La forme spécifique des turbines permet de réduire la hauteur du pilier 61, et des éléments de l'éolienne situés au niveau de la nacelle 40. Ainsi, les opérations de maintenance, nécessitant un accès au socle, ou à la nacelle située sur le socle, ne sont pas effectuées à grande hauteur. On réduit aussi le risque de basculement de l'éolienne. La structure proposée permet ainsi d'adresser des vents situés en dessus de la couche limite, sans nécessiter un pilier de grande hauteur.

La structure de maintien 50 comporte un mât $50_i$ s'étendant verticalement à partir de la nacelle 40. Le plan médian $P_m$ forme un plan de symétrie du mât, et de façon plus générale, de l'ensemble de la structure de maintien. Selon un axe longitudinal X, horizontal, et parallèle au plan médian, le mât $50_i$ est reculé d'une distance de recul d par rapport au plan aval $P_a$. Ainsi, en considérant la direction du vent, le mât est situé en amont du plan aval $P_a$. La distance de recul d est ajustée pour permettre un passage de chaque pale à proximité du mât $50_i$, de façon à former un effet déflecteur, comme décrit par la suite. La distance de recul peut être comprise entre $0,75\ r_{max}$ et $1,25$ fois $r_{max}$.

La structure de maintien 50 comporte une partie supérieure $50_s$, formée par :

-    un premier bras supérieur 51, s'étendant à partir du mât $50_i$ vers un premier support supérieur $51_s$, adjacent de l'extrémité supérieure $10_s$ de la première turbine 10 ;
-    un deuxième bras supérieur 52 s'étendant à partir du mât $50_i$ vers un deuxième support supérieur $52_s$, adjacent l'extrémité supérieure $20_s$ de la deuxième turbine 20.

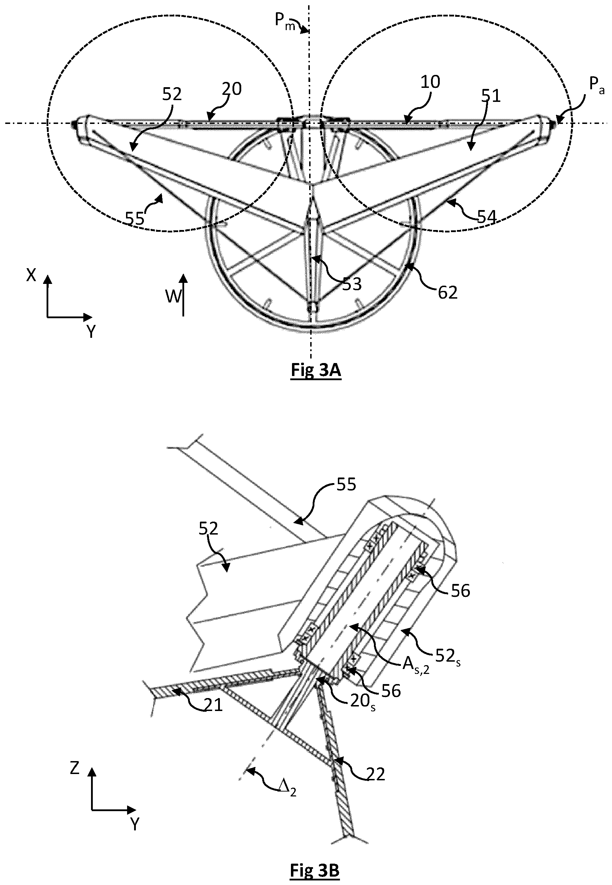

La figure 3A représente une vue de dessus de l'éolienne. On observe que la distance entre la structure de maintien 50 et le plan aval $P_a$ varie en fonction des différents composants de la structure de maintien : la distance entre le mât $50_i$ vertical et le plan aval $P_a$ est constante et égale à la distance de recul d précédemment décrite. La distance entre chaque bras supérieur 51, 52 et le plan aval $P_a$ se réduit au fur et à mesure que l'on s'approche des supports supérieurs $51_s$ et $52_s$. Sur la figure 3A, on a représenté une direction du vent W ainsi qu'un débattement de chaque turbine, en pointillés. L'éolienne est agencée de telle sorte que le mât $50_i$ soit situé en amont de chaque turbine, le terme amont étant à considérer relativement au sens du vent. L'axe longitudinal X étant orienté du mât $50_i$ vers le plan aval, les bras supérieurs progressent à la fois selon l'axe vertical Z et l'axe X. Plus on progresse selon Z, plus les bras supérieurs se rapprochent du plan aval $P_a$, ce dernier comportant les extrémités supérieures $10_s$ et $20_s$ de chaque turbine.

Le mât $50_i$ est relié à un poinçon 53, incliné par rapport à l'axe vertical, et s'étendant, à partir du mât $50_i$, en s'éloignant du plan aval $P_a$. L'inclinaison du poinçon 53, par rapport à l'axe vertical, est ainsi opposée aux inclinaisons respectives des bras supérieurs 51 et 52 par rapport à la verticale. La structure de maintien comporte :

- un premier hauban 54, s'étendant entre le poinçon 53 et le premier support supérieur $51_s$ ;
- un deuxième hauban 55, s'étendant entre le poinçon 53 et le deuxième support supérieur $52_s$.

Le premier bras supérieur 51 s'étend jusqu'au premier support supérieur $51_s$. Le premier support supérieur $51_s$ est agencé pour recevoir un premier arbre supérieur $A_{s,1}$ coaxial du premier axe de rotation $\Delta_1$, et relié à la première extrémité supérieure $11_s$ de la première turbine 10. De façon analogue, le deuxième bras supérieur 52 s'étend jusqu'au deuxième support supérieur $52_s$. Le deuxième support supérieur $52_s$ est agencé pour recevoir un deuxième arbre supérieur $A_{s,2}$ coaxial du deuxième axe de rotation $\Delta_2$, et relié à la deuxième extrémité supérieure $21_s$ de la deuxième turbine 20. Par arbre supérieur, on entend un élément mécanique tournant avec une extrémité supérieure et reliant l'extrémité supérieur et le support supérieur. Chaque bras supérieur 51, 52 s'étend de part et d'autre du plan médian $P_m$, à partir du mât $50_i$. La structure de maintien, formée par le mât, les haubans, et les jambes de force décrites par la suite, est symétrique par rapport au plan médian $P_m$.

Le premier support supérieur $51_s$ et le deuxième support supérieur $52_s$ forment une liaison pivot entre la structure de maintien 50 et la première turbine 10 et la deuxième turbine 20 respectivement. Les extrémités inférieures de chaque turbine sont reliées à la nacelle 40 par une liaison pivot. Cette dernière assure une transmission de la rotation de chaque turbine vers la génératrice 30, comme décrit par la suite. Les supports supérieurs $51_s$, $52_s$ forment une liaison pivot qui laisse les arbres supérieurs $A_{s,1}$, $A_{s,2}$ libres en rotation. Le fait qu'une pale soit maintenue, au niveau de chaque extrémité (inférieure et supérieure), par une liaison pivot, permet de maintenir une certaine rigidité, et de s'opposer à une déformation des pales lors de leur mise sous tension, sous l'effet de la rotation. Chaque support supérieur comporte des roulements à billes ou rouleaux 56, permettant une rotation d'un arbre supérieur ($A_{s,1}$ ou $A_{s,2}$) autour de l'axe de rotation ($\Delta_1$ ou $\Delta_2$) à l'intérieur de chaque support supérieur.

La figure 3B représente une vue de coupe du deuxième support supérieur $51_s$. Sur cette figure, on a représenté le deuxième axe de rotation $\Delta_2$, ainsi que le deuxième arbre de rotation supérieur $A_{s,2}$, ce dernier assurant une liaison mécanique entre la deuxième turbine 20 et deuxième le support supérieur $52_s$. Le deuxième support supérieur $52_s$ comporte des roulements annulaires 56, s'étendant autour de l'axe de rotation $\Delta_2$, et permettant une rotation de l'arbre $A_{s,2}$ inséré dans le support supérieur $20_s$.

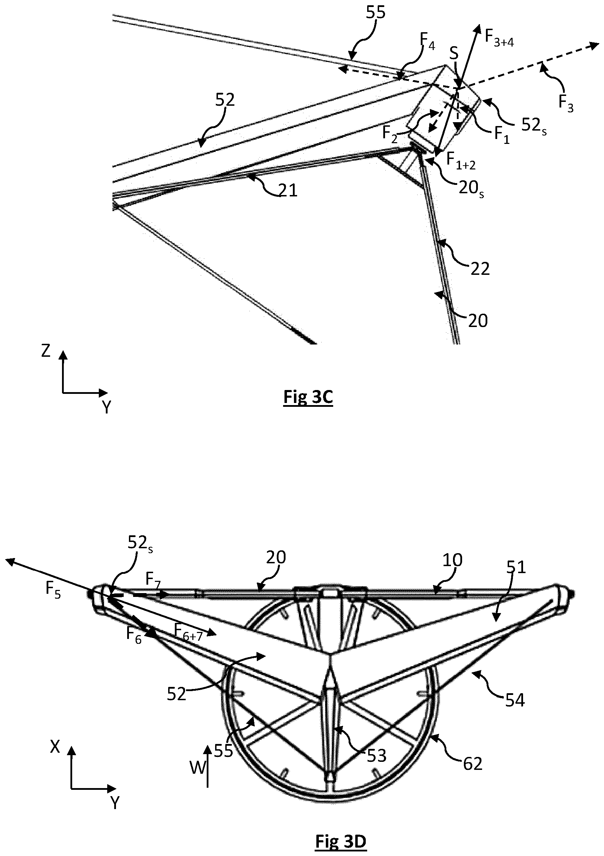

Chaque bras supérieur 51, 52 joue le rôle de pylône, entre un hauban 54, 55 relié au poinçon 53, et une turbine 10, 20, cette dernière étant maintenue en traction entre un support supérieur $51_s$, $52_s$ et la nacelle 40. Dans un plan vertical, comme représenté sur la figure 3C, les forces s'exerçant au niveau de chaque support supérieur 51s, 52s sont de type gravitaire et centrifuges. Sur la figure 3C, on a représenté les forces s'exerçant, dans un plan vertical YZ, au niveau d'un point S du deuxième support supérieur $52_s$. La force $F_1$ est correspond à la gravité, orientée verticalement, et la force $F_2$ correspond à une force centrifuge, dirigée selon l'axe de rotation $\Delta_2$. La force centrifuge résulte d'une traction exercée par la turbine sous l'effet de la rotation. Lorsque la turbine 20 tourne, les pales 21, 22 ont tendance à s'écarter l'une de l'autre, par force centrifuge, ce qui génère la force résultante $F_2$ au niveau du support supérieur $52_s$. La force $F_3$ correspond à une force de résistance à la compression du bras supérieur 52. La force $F_4$ est une force de traction résultant de la tension exercée par le hauban 55. Sur la figure 3B, on a représenté les forces $F_1$ à $F_4$, ainsi que les forces résultantes :

- $F_{1+2}$ = F1 + F2 : il s'agit des forces de traction exercées par la turbine ;
- $F_{3+4}$ = F3 + F4 : il s'agit des forces exercées par la structure de maintien : bras supérieur 52 et hauban 55.

Ainsi, le bras supérieur 52 fait office de pylône de part et d'autre duquel s'étendent entre deux haubans : le hauban proprement dit 55 et la turbine 20, qui se comporte d'une façon analogue à un hauban, en exerçant une contrainte de traction sur le bras supérieur au cours de la rotation. Il en résulte une triangulation des efforts, conduisant le bras supérieur 52 à être soumis à un effort de compression, sous l'effet de la tension du hauban et de la turbine. Ce type de structure, comparable à celle d'un pont suspendu, est particulièrement robuste. La situation est naturellement symétrique s'agissant du premier support supérieur $51_s$, ce dernier étant relié au hauban 54 et à la première turbine 10, se comportant comme un hauban lors de la rotation. Ce type de maille triangulaire, propice à une triangulation des efforts, favorise des contraintes de traction/compression, les contraintes de flexion étant minimisées.

Dans le plan horizontal XY, les forces s'appliquant sur la structure de maintien résultent de forces de poussée. L'équilibre est assuré par les formes en « V », s'ouvrant vers l'aval (i-e axe X), respectivement formées par les haubans 54, 55 s'étendant à partir du poinçon 53, et par les deux bras supérieurs 51 et 52. Dans le plan horizontal, les bras supérieurs 51, 52 et le poinçon 53 ont une action de résistance à la compression, similaire à un pylône. Chacun est relié à deux haubans exerçant une action de traction pouvant être considérée comme symétrique de part et d'autre de chaque pylône ainsi constitué. On retrouve différentes mailles triangulaires, propices à une triangulation des efforts. Il s'agit notamment :

- du poinçon 53,relié aux haubans 54, 55 ;
- du deuxième bras supérieur 52 ; relié au hauban 55 et à la deuxième turbine 20, cette dernière étant exerçant une action de traction, comme décrit en lien avec la figure 3B ;
- du premier bras supérieur 51, relié au hauban 54 et à la première turbine 10, cette dernière exerçant une action de traction de façon analogue à la turbine 20.

Sur la figure 3D, on a représenté une triangulation des forces s'exerçant dans le plan horizontal au niveau du support supérieur $52_s$ : Les forces $F_5$, $F_6$ et $F_7$ correspondent respectivement à la résistance à la compression exercée par le bras supérieur 52, la traction exercée par le hauban 55 et la traction exercée par la turbine 20 sous l'effet de la rotation, et plus précisément la composante horizontale de la force centrifuge s'exerçant sur chaque pale. La force $F_{6+7}$ correspond à la somme $F_6 + F_7$.

Sur la figure 1C, établie dans un plan vertical YZ parallèle au plan aval $P_a$, on observe une autre maille triangulaire formée par le hauban 54, le poinçon 53 et le bras supérieur 51. Le poinçon 53 et le bras supérieur 51 sont maintenus en compression par le hauban 54, ce dernier étant soumis à une contrainte de traction. On minimise, une fois de plus, la formation de contraintes en flexion. De façon symétrique, le hauban 55, le poinçon 53 et le bras supérieur 52 définissent une autre maille triangulaire.

La structure de maintien de l'éolienne comporte également des jambes de force 41 assurant une action de rigidification anti-basculement. Deux jambes de forces 41 s'étendent à partir du mât $50_i$ vers la nacelle 40 supportant la génératrice 30. Les jambes de forces sont disposées en V, s'ouvrant au fur et à mesure qu'on se rapproche de la nacelle 40. Il s'agit ici de réduire une force de flexion s'exerçant sur le mât $50_i$, les jambes de force subissant une contrainte en compression sous l'effet de la poussée s'exerçant sur chaque turbine, parallèlement au sens du vent. La seule partie de la structure de maintien qui est soumise à une contrainte de flexion est la partie du mât s'étendant entre les jambes de force 41 et les bras supérieurs 51, 52.

La forme en V, selon laquelle les jambes de force s'écartent l'une de l'autre, de part et d'autre de l'axe longitudinal X, au fur et à mesure qu'elles se rapprochent de la nacelle 40, assure un effet anti-roulis. Ainsi, les jambes de force 41 ont une fonction anti-basculement (rotation dans le plan médian $P_m$ autour de l'axe Y) et anti-roulis (rotation dans un plan perpendiculaire au plan médian $P_m$, autour de l'axe X) de l'éolienne. Le recours à des jambes de force 41 est rendu possible par le fait que le mât $50_i$ situé en amont des turbines. Ainsi, l'emplacement du mât $50_i$, en amont des turbines, permet de réduire la contrainte en flexion s'appliquant à ce dernier, en permettant une disposition des jambes de forces.

La disposition des jambes de force 41, et en particulier l'inclinaison de chaque jambe de force par rapport à l'axe longitudinal X, est dimensionnée de façon à permettre la rotation des pales.

Comme représenté sur les figures 1A à 1C, la nacelle 40 peut être libre en rotation par rapport au support 60, autour d'un axe de rotation vertical O, autour duquel s'étend le mât $50_i$. La nacelle 40 permet une rotation de l'ensemble formé par la structure de maintien 50, les turbines et la génératrice 30, autour de l'axe de rotation vertical O. L'axe vertical O est représenté sur les figures 1B. Sur la figure 3A, l'axe de rotation O correspond au centre du chemin de roulement 62.

Du fait de la symétrie de l'éolienne par rapport au plan médian $P_m$, la rotation de la nacelle permet d'obtenir une éolienne autorégulée par rapport à une orientation du vent. Sous l'effet du vent, des forces s'appliquent sur chaque turbine, visant à orienter ces dernières devant le mât, de telle sorte que le plan aval $P_a$ tende à s'orienter, de manière passive, perpendiculairement à la direction du vent W. Par de manière passive, on entend sans nécessiter une action d'un asservissement électrique. Il s'agit d'une orientation passive en lacet. Selon une telle orientation, les forces de poussée respectivement exercées par chaque turbine, selon l'axe longitudinal X, sont symétriques et s'équilibrent, du fait de la symétrie de l'ensemble par rapport au plan médian $P_m$. En cas de variation d'orientation du vent, un déséquilibre des forces de poussée survient, ce qui conduit à un auto-ajustement de l'éolienne de façon que les forces de poussées soient équilibrées : l'orientation de l'éolienne s'auto-ajuste, de façon que le plan aval $P_a$ soit toujours orienté perpendiculairement au vent. L'auto-ajustement résulte de la symétrie de l'éolienne par rapport au plan médian. Dans l'exemple représenté sur la figures 1A à 1C, la nacelle est mobile en rotation sur des galets 41, le long d'un chemin de roulement circulaire 62 ménagé sur le support fixe 60. Le chemin de roulement 62 et l'orientation du mât par rapport au plan aval est schématisé sur la figure 3A. Le chemin de roulement s'étend selon un plan de roulement $P_r$ horizontal. Le plan de roulement est représenté sur les figures 1B et 2C.

De façon alternative, la nacelle 40 peut être fixe par rapport au support 60. Dans ce cas, l'orientation du mât et des turbines est prédéterminée, en fonction d'une direction la plus fréquente du vent. Ce type de configuration convient dans les applications marines, dans lesquelles une direction dominante du vent peut être connue. Le contact entre la nacelle et le support peut alors prendre la forme d'un encastrement.

Quelle que soit la configuration retenue (fixe ou mobile en rotation), le mât est situé en amont des pales, le terme amont étant considéré relativement au sens du vent.

La distance de recul d du mât $50_i$ par rapport au plan aval $P_a$ peut faire l'objet d'une optimisation. Plus d est faible, plus le rayon $r_{max}$ de chaque pale doit être faible, de façon à autoriser une rotation de la pale entre l'axe de rotation et derrière le mât $50_i$. Une diminution de $r_{max}$ réduit le maître couple de l'éolienne. Plus la distance de recul d augmente, plus le rayon $r_{max}$ peut être élevé, au détriment d'une sensibilité au roulis accrue et à un encombrement augmenté. Les inventeurs estiment qu'il est préférable que le ratio $d/r_{max}$ soit compris entre 0.4 et 0.6, par exemple voisin de 0.5.

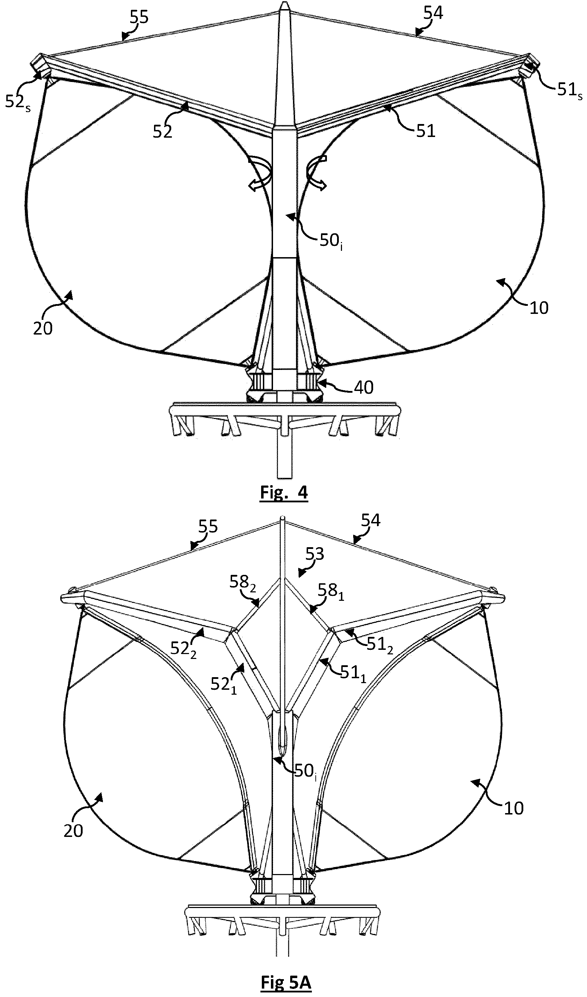

Outre la réduction des contraintes de flexion, et la possibilité d'orientation passive en lacet, un autre avantage de la disposition du mât $50_i$ en amont de chaque turbine est l'effet d'occultation que peut présenter le mât sur les pales. Cet effet bénéfique se produit par exemple lorsque les pales sont agencées pour remonter le vent le long de la trajectoire la plus proche du mât (mode refoulant). Cet effet d'occultation peut être assuré par le mât $50_i$, mais aussi par une partie des bras supérieurs, comme représenté sur la figure 4. La figure 4 représente une vue, en amont, de l'éolienne. Le mât $50_i$ peut être dimensionné de façon à masquer le vent affectant une portion de la partie équatoriale de chaque pale. Les bras supérieurs 51 et 52 peuvent également contribuer à l'effet de masquage. L'effet de masquage se produit lorsqu'une pale remonte au vent à proximité du bras, dans une zone dans laquelle la pale n'est pas motrice, au sens ou la pale n'est pas considérée comme productive. L'effet de masquage contribue ainsi à augmenter l'efficacité de l'éolienne.

L'effet de masquage peut être renforcé dans une configuration telle que représentée sur la figure 5A, dans laquelle chaque bras supérieur comporte une succession de bras élémentaires.

Ainsi, le premier bras supérieur 51 comporte un premier bras élémentaire $51_1$, s'étendant à partir du mât $50_i$, et un deuxième bras élémentaire $51_2$, s'étendant entre le premier bras élémentaire $51_1$ et le support supérieur $51_s$. Le deuxième bras supérieur 52 comporte des bras élémentaires $52_1$ et $52_2$ disposés de façon analogue. L'inclinaison de chaque bras élémentaire par rapport à la verticale est d'autant plus élevée que le bras élémentaire est éloigné du mât $50_i$.

Le recours à des bras élémentaires permet également d'augmenter une rigidification de la structure de maintien. Cela permet également d'éviter un effet de flambement de chaque bras supérieur. La structure de maintien peut comporter des jambes de rigidification $58_1$, $58_2$, s'étendant, à partir du poinçon 53, vers chaque jonction entre deux bras élémentaires successifs. Les jambes de rigidification sont agencées de façon à former des mailles triangulaires, ce qui favorise l'apparition de contraintes en traction/compression. Selon une variante, le nombre de bras élémentaires successifs peut être supérieur à 2.

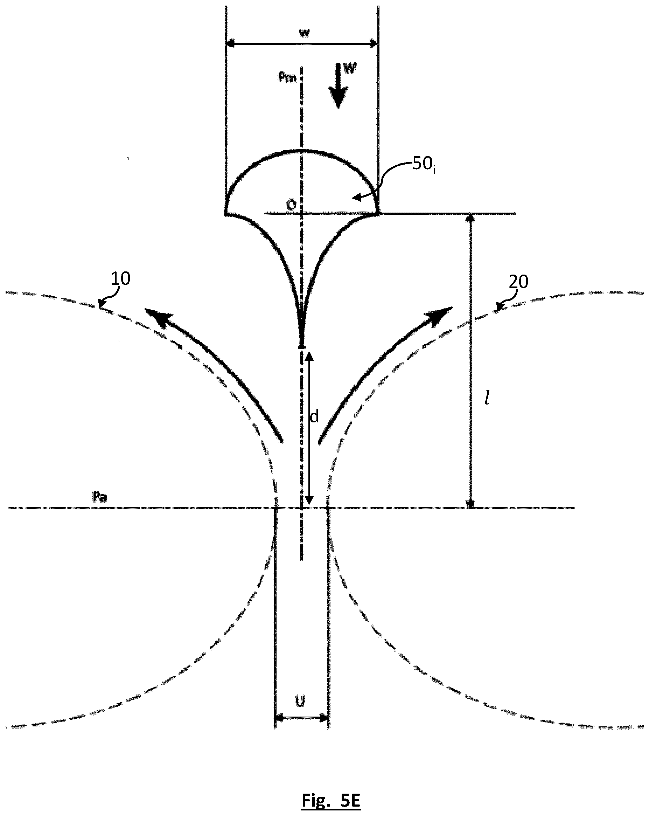

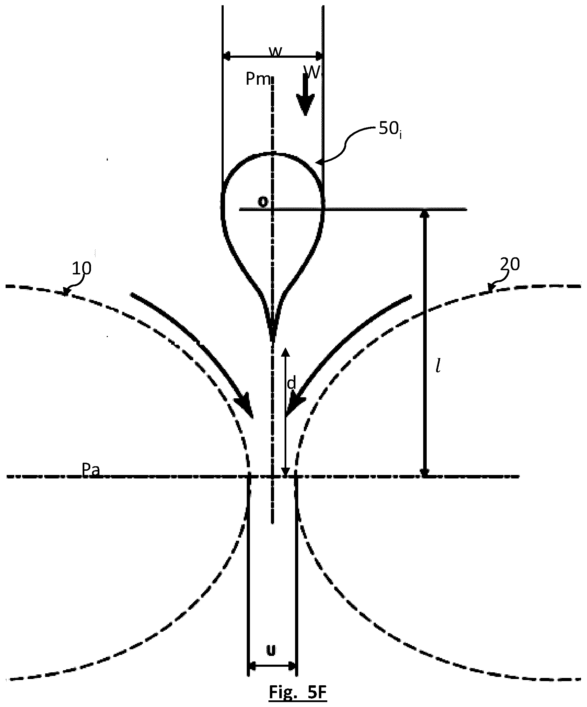

L'effet bénéfique du mât, aussi bien selon le mode refoulant que le mode aspirant, est détaillé dans des variantes décrites en lien avec les figures 5E et 5F.

Profil des bras

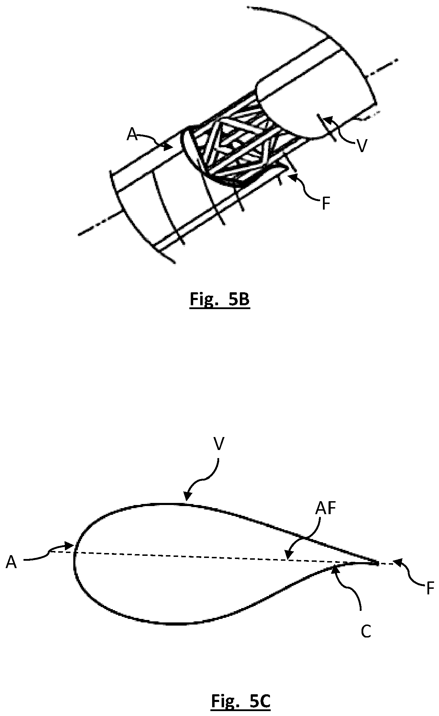

Préférentiellement, les bras supérieurs 51 et 52 ont chacun une section verticale dont le profil correspond au profil d'une aile dit à faible dièdre comme représenté sur la figure 4 ainsi que sur les figures 5A et 5B. Sur la figure 5A, on a représenté une forme particulière profilée des bras supérieurs élémentaires qui sont constitués de segments d'ailes. La section profilée présente un bord d'attaque A, visible sur la figure 5B, et un bord de fuite F, opposé au bord d'attaque. Les bords d'attaque et de fuite sont reliés l'un à l'autre par une voilure latérale V

Le profil de ces bras est défini classiquement par leur section verticale, dans un plan parallèle au plan médian $P_m$ également parallèle à la direction du vent W. Ces profils sont ceux d'ailes dites épaisses, comportant un extrados convexe, un intrados qui l'est également mais qui présente une concavité locale vers le bord de fuite. Sur la figure 5C, la concavité locale de l'intrados est matérialisée par un symbole C. La principale fonction est de participer au maintien structurel des turbines face au vent. Le profil peut être caractérisé par une épaisseur relative, définie comme le rapport entre l'épaisseur maximale du profil sur la longueur cordale du profil. L'épaisseur relative, peut notamment se rapprocher de la valeur de 0.5 pour assurer une résistance structurelle élevée. A contrario, cette même épaisseur relative devrait se rapprocher de 0.35 pour obtenir un rapport portance / traînée élevée et par conséquent favorable : la portance a pour effet de réduire l'effort de compression s'appliquant sur le mât $50_i$, puis sur la nacelle 40 par le biais des jambes de force 41. La trainée produit quant à elle un couple de basculement néfaste. Une valeur de compromis est de positionner le profil d'aile épaisse de manière à ce que la valeur de son angle d'incidence, soit dans la plage inférieure de son incidence de décrochage, c'est-à-dire une valeur comprise entre 10° et 20°, par exemple 15°..

Par angle d'incidence, on entend un angle, par rapport à l'horizontale, formée par une droite AF reliant le bord d'attaque au bord de fuite, cette droite étant usuellement désignée par le terme « ligne de corde ».

Les bras 51 et 52 ainsi définis pour assurer une portance, présentent un troisième avantage. On peut les assimiler à une paire d'ailes qui de ce fait émettent un flux d'air en direction du sol pour créer cette portance. Une fraction de ce flux d'air est émise à proximité des supports supérieurs $51_s$ et $52_s$. Dans cette zone, les turbines sont impactées le long des parties supérieures rectilignes peu productives, sans qu'il ait d'effet sensible. En progressant le long du bord de fuite des bras vers la partie équatoriale, l'émission du flux d'air gagne des parties de pales plus productives.

Une telle structure peut contribuer au redressement du vent perpendiculairement au plan aval $P_a$ et augmenter l'intensité du vent qui impacte les turbines. Ce redressement demande de positionner la droite AF, reliant le bord d'attaque A et le bord de fuite F, d'une manière spécifique selon que les turbines sont en sens aspirant ou refoulant. La littérature sur les turbines Darrieus à pales rectilignes isolées consacrée aux déflecteurs augmentant leur rendement montrent que dans le cas du sens refoulant, l'angle d'incidence de la forme profilée doit être tel que la droite AF coupe préférentiellement le chemin de la pale après que cette dernière a parcouru sensiblement les 2/3 de sa trajectoire remontant au vent. Dans le cas du sens aspirant, l'angle d'incidence de la forme profilée doit être tel que droite AF coupe le chemin de la pale après que cette dernière ait parcouru la moitié de sa trajectoire descendant le vent.

Par ailleurs, sous certaines conditions, la forme profilée confère, aux bras supérieurs, une certaine portance, tendant à alléger la structure de maintien sous l'effet du vent. Cela permet de réduire l'effort de compression appliquée par le mat $50_i$ sur la nacelle 40, par le biais des jambes de force 41.

D'une façon générale, selon les variantes discutées en lien avec les figures 5A à 5D, chaque bras présente une section verticale profilée, s'étendant entre un bord d'attaque et un bord de fuite, le bord de fuite étant orienté vers le plan aval $P_a$. La ligne reliant le bord d'attaque et le bord de fuite peut avantageusement être inclinée par rapport à l'horizontale selon un angle d'incidence compris entre 10° et 20°.

Sur la figure 5A, chaque turbine comporte trois pales, angulairement espacées de 120° les unes des autres. Une telle configuration est également représentée sur la figure 5D : la première turbine 10 comporte trois pales 11, 12, 13. La deuxième turbine 20 comporte trois pales 21, 22, 23. Les inventeurs estiment qu'il est préférable que la turbine comporte soit deux pales angulairement espacées de 180°, soit trois pales, angulairement espacées de 120°. Une augmentation du nombre de pales au-delà de trois n'est pas considéré comme bénéfique.

<u>Profil du mât</u>

Les figures 5E et 5F représentent des variantes, selon lesquelles le mât $50_i$ présente une section horizontale présentant des profils optimisés. Selon ces variantes, le mât s'étend autour d'un axe central O. Lorsque le mât est mobile en rotation, l'axe central O correspond à l'axe de rotation. L'axe central O est positionné à une distance $l$ par rapport au plan aval $P_a$. Ainsi, en considérant la direction du vent, le mât est situé en amont du plan aval $P_a$. Le mât s'étend, perpendiculairement au plan médian $P_m$, selon une largeur w. La distance entre l'axe central O et le plan aval est notée $l$. La distance $l$ et la largeur w ainsi que la forme de la section du mât dans un plan perpendiculaire à l'axe O (plan horizontal) peuvent être ajustées selon que les turbines sont configurées en sens refoulant ou aspirant afin de conférer aux mâts des effets positifs sur les performances des turbines, comme décrit ci-après : .

Considérant le sens refoulant, outre son rôle sustentateur dans la structure de maintien 50, le mât $50_i$ peut jouer un rôle de déflecteur aérodynamique comme décrit dans la publication Jin X, Wang Y, Ju W, He J, Xie S. Investigation into parameter influence of upstream deflector on vertical axis wind turbines output power via three-dimensional CFD simulation. Renew. Energ. 2018;115:41-53. Le déflecteur de cette étude combine deux effets positifs pour augmenter le rendement :

- un effet de frein dans la zone inter-turbines, résultant de la dépression à l'aval du déflecteur, qui subit une forte trainée de pression ;
- un effet de redressement de l'écoulement incident sur les pales, ce qui se traduit par un renforcement de leur force motrice. L'effet de redressement se fait sentir dans la demi-ellipse amont parcouru par les pales dans le secteur compris entre le point le plus amont de ce demi-disque et la zone inter-turbines, c'est-à-dire la zone située entre les deux turbines.

La largeur minimale de la zone inter-turbines (perpendiculairement au plan médian $P_m$) est la distance U précédemment évoquée. Les résultats de ladite publication transposés au cas d'une turbine Darrieus à pales courbes montrent d'une part que le rapport $w/2r_u$ = 0, 33 constitue une limite supérieure des largeurs admissibles, la limite inférieure choisie par les inventeurs étant 0,25.

$$0,25 < w/2r_u < 0,33$$

Et, d'autre part que le rapport $l/2r_u$ = 0,7 constitue une limite supérieure des largeurs admissibles, la limite inférieure étant fixée par les inventeurs à 0,6.

$$0,6 < l/2r_u < 0,7$$

Si l'effet de déflecteur aérodynamique peut simplement être obtenu par une plaque parallèle au plan aval $P_a$, de largeur w positionnée à une distance $l$ du plan aval $P_a$, les contraintes imposées par la fonction sustentatrice du mât et la nécessité de laisser circuler les pales des turbines de part et d'autre, conduisent à introduire une section bidimensionnelle de type poutre en T ou caisson triangulaire. Autrement dit, il est préférable que la section horizontale du mât présente à la fois une composante s'étirant parallèlement au plan aval $P_a$, formant un déflecteur, mais aussi, en aval du déflecteur, une composante s'étirant perpendiculairement au plan aval $P_a$, pour redresser l'écoulement d'air en aval du déflecteur. Par redresser, on entend faire tendre vers la direction d'écoulement incident, en amont du déflecteur. La figure 5E montre un mode de réalisation d'une telle section optimisée pour des turbines en sens refoulant. Sur cette figure, la section horizontale du mât s'étend entre une extrémité amont, exposée au vent, convexe, puis une extrémité avale. Entre l'extrémité amont et l'extrémité avale, la section horizontale du mât est formée de deux parties concaves, symétriques l'une de l'autre par rapport au plan médian. Les concavités ménagées dans l'extrémité avale confèrent un effet de freinage de l'écoulement, ce dernier ayant été préalablement redressé par l'extrémité amont.

La figure 5F montre un mode de réalisation d'une telle section optimisée pour des turbines en sens aspirant Considérant le sens aspirant, outre son rôle sustentateur dans la structure de maintien 50, le mât $50_i$, peut jouer un rôle positif de redresseur d'écoulement incident dans la zone inter-turbines. En effet, dans le sens aspirant, la zone inter-turbines est soumise à des décrochages tourbillonnaires profonds. Avantageusement, le mât présente un profil épais, comportant une extrémité amont convexe, symétrique selon le plan médian $P_m$, à faible trainée, dont le centre aérodynamique se situe sur l'axe de rotation O et dont l'épaisseur w est telle que :

$$0,15 < w/2r_u < 0,25$$

Le centre aérodynamique du mât est situé à une distance I en amont du plan Pa telle que :

$$0,6 < l/2r_u < 0,7$$

Le terme centre aérodynamique, usuellement désigné « aerodynamic center », est une notion connue dans le domaine des ailes.

D'une façon plus générale, il est avantageux que le mât présente une section horizontale s'étendant, parallèlement au plan médian $P_m$, entre une extrémité amont convexe et une extrémité aval, en se rapprochant du plan aval $P_a$. De préférence, la section horizontale du mât s'effile entre l'extrémité amont et l'extrémité avale. De préférence, la section horizontale du mât est symétrique par rapport au plan médian $P_m$. Lorsque les turbines sont configurées pour fonctionner selon le sens de rotation refoulant, la section horizontale du mât présente, entre l'extrémité amont et l'extrémité avale, deux sections concaves, agencées symétriquement par rapport au plan médian.

Entretoises

Les figures 6A et 6C sont des vues d'entretoises rigides et profilées, convenant respectivement à des turbines à 3 pales et à 2 pales. Comme précédemment évoqué, les entretoises, s'étendant perpendiculairement à l'axe de rotation, permettent une rigidification de chaque turbine. Ces entretoises dont profilées, de façon à réduire la force de trainée. L'entretoise représentée sur la figure 3A comporte trois branches, s'étendant à 120° à partir d'un centre situé le long de l'axe de rotation. Chaque entretoise peut être disposée entre deux parties rectilignes respectives de pales différentes ou à proximité des jonctions entre les parties rectiligne et équatoriale de pales différentes. Bien qu'une disposition d'une entretoise soit particulièrement favorable, du point il de vue de la rigidité, dans le plan équatorial, il s'avère qu'une telle disposition entraîne la formation de turbulences, sources de dissipation d'énergie. Il est préférable de recourir à une entretoise supérieure et une entretoise inférieure, disposées plus proches d'une extrémité d'une turbine (respectivement extrémité supérieure et inférieure) que du plan équatorial.

Chaque entretoise est formée selon un profil aérodynamique symétrique par rapport à un plan perpendiculaire à l'axe de rotation de la turbine. La jonction de chaque entretoise avec une pale peut être optimisée, de façon à former un congé de raccordement 14', comme représenté sur la figure 6C. Le congé de raccordement peut définir un rayon décroissant du bord d'attaque au bord de fuite de la pale.

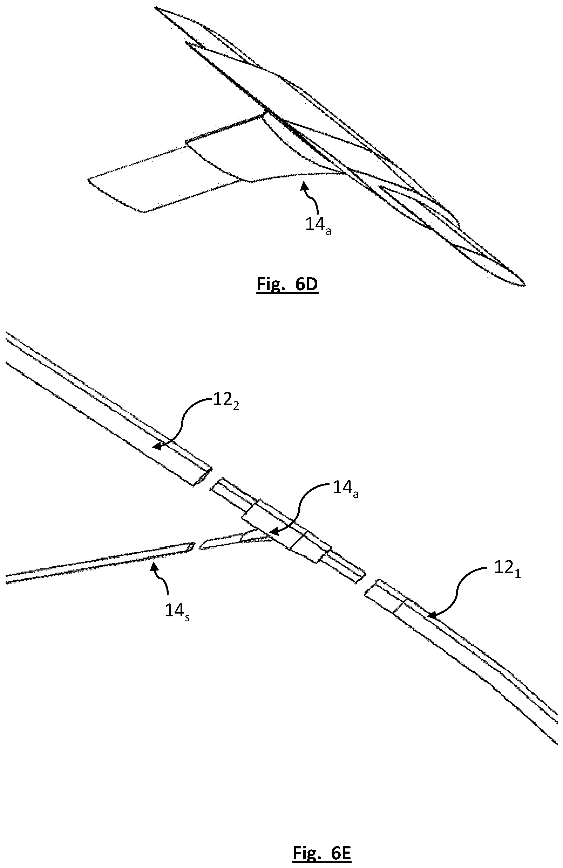

La figure 6D représente une pièce d'interface $14_a$, permettant de relier une entretoise, en l'occurrence l'entretoise supérieure $14_s$, à une pale, en l'occurrence la pale 12. La pièce d'interface forme un T, comportant trois extrémités. La pièce d'interface est destinée à être insérée dans ou autour l'entretoise $14_s$, ainsi que dans ou autour deux portions de la pale $12_1$, $12_2$. La pièce d'interface est configurée pour former une continuité de la courbure de la pale, entre les deux portions de pales $12_1$, $12_2$. cf. figure 6E. La pièce d'interface s'engage dans ou autour de l'entretoise ou de chaque portion de la pale selon une longueur d'emboîtage. Cela permet de répartir les efforts selon la longueur d'emboîtage. On limite alors l'apparition d'effets de fatigue au niveau de la jonction.

Chaîne de transmission électromécanique

Les figures 7A et 7B détaillent la chaine de transmission électromécanique de l'éolienne, permettant l'entraînement de la génératrice. Au niveau de chaque extrémité inférieure, chaque turbine est reliée à un arbre de rotation inférieur $A_{i,1}$, $A_{i,2}$, s'étendant entre chaque extrémité inférieure, et un renvoi d'angle 31, 32. Chaque arbre de rotation inférieur $A_{i,1}$, $A_{i,2}$ est respectivement parallèle à un axe de rotation $\Delta_1$, $\Delta_2$. Chaque renvoi d'angle forme une connexion mécanique entre un arbre de rotation inférieur $A_{i,1}$, $A_{i,2}$, incliné par rapport à l'horizontale, et un arbre récepteur $A_{r,1}$, $A_{r,2}$ de la génératrice 30, horizontal, parallèle à l'axe latéral Y. Chaque arbre récepteur entraîne un arbre traversant de l'unique génératrice 30. La connexion entre chaque arbre récepteur et l'arbre traversant de la génératrice peut être assurée par deux accouplements flexibles de préférence homocinétiques disposés de part et d'autre de la génératrice. Les accouplements flexibles permettent de raccorder les arbres récepteurs $A_{r,1}$, $A_{r,2}$ à l'arbre traversant de la génératrice 30. La flexibilité de chaque accouplement permet de tolérer d'éventuels défauts d'alignement, résultant par exemple de vibrations ou d'à-coups de la turbine.

La figure 7B représente un détail d'un empilement d'éléments à partir de la turbine 20 jusqu'au renvoi d'angle 32. L'empilement, comporte une bride d'emplanture de pale 38, un disque de frein 37, des mâchoires de frein 36, un plateau 35, formant une extrémité d'un multiplicateur à plateau 34. Le recours à un multiplicateur à plateau est privilégié de façon à minimiser la dimension, parallèlement à l'axe de rotation. Cela réduit d'éventuels effets de bras de levier. La transmission de la rotation est assurée par des vis reliant la bride 38 à une périphérie du plateau 35, puis par l'arbre inférieur $A_{i,2}$ relié au multiplicateur 34. L'arbre inférieur $A_{i,2}$ comporte des cannelures d'accouplement 33, qui s'insèrent dans le renvoi d'angle 32. Un tel agencement forme une liaison pivot, comportant un étage de frein, constitué d'un disque de frein 37 et mâchoires de frein 36. Les mâchoires de frein 36 sont supportées par le multiplicateur 34. Elles sont configurées pour venir en appui sur le disque de frein 37, ce dernier étant solidaire de la bride 38. Un tel agencement permet de disposer un étage de frein au plus près de chaque turbine, et plus précisément entre le multiplicateur et la turbine. Cela évite une transmission d'un couple de freinage à travers le multiplicateur. Des disques de freins complémentaires peuvent être disposés entre la génératrice 30 et le multiplicateur 34. Le recours à de tels disques de freins complémentaires peut être nécessaire lors d'un freinage d'urgence. Selon une variante, tout ou partie de la multiplication peut être partiellement intégrée dans le renvoi d'angle. Le renvoi d'angle comporte alors des pignons aux nombres de dents différents, assurant la multiplication.

L'empilement représenté sur la figure 7B est compact, ce qui permet de réduire les dimensions de la nacelle. L'assemblage de l'empilement est simple, puisqu'il se compose de deux composants principaux : le renvoi d'angle 32 et le multiplicateur 34 : le renvoi d'angle s'appuie sur la nacelle, et le multiplicateur est interposé entre le renvoi d'angle et la turbine, en étant raccordé à cette dernière par la bride 38.

L'empilement forme un ensemble autoporteur, ne nécessitant pas de pièce de maintien le reliant à la nacelle. Il en résulte une nacelle particulièrement compacte. Cela permet de maximiser l'espace libre autour de l'extrémité inférieure de chaque turbine. On évite alors la formation de turbulences pouvant être induites par une nacelle encombrante ou des pièces de maintien.

L'empilement permet également de minimiser une distance entre l'extrémité inférieure de la turbine et la nacelle. Cela diminue des effets de bras de levier. L'inclinaison des deux axes de rotation permet de rapprocher les renvois d'angle 32 reliés à chaque turbine de part et d'autre de la génératrice.

L'éolienne comporte une unité de contrôle commande, non représentée, qui assure, de façon continue, une vitesse de rotation optimale des turbines.

Variantes

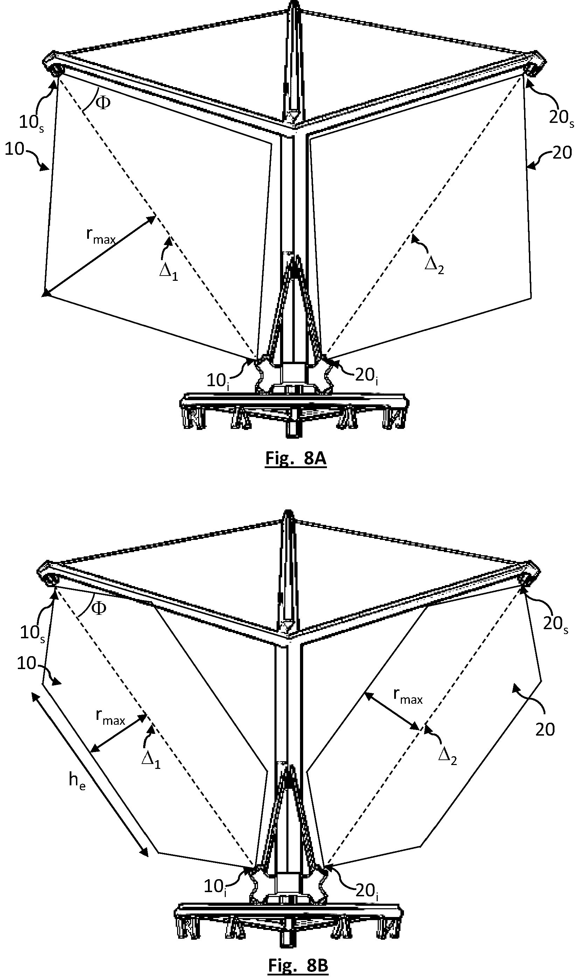

La forme des pales décrites en lien avec les figures 2A et 2C correspond à une configuration considérée comme optimale par les inventeurs. Cependant, les pales peuvent prendre d'autres formes, sans sortir du cadre de l'invention. Les figures 8A et 8B illustrent des exemples de pales qui, bien que non optimales, peuvent être exploitées. De telles pales présentent l'avantage d'être plus simples et moins couteuses à fabriquer.

Sur les figures 8A et 8B, chaque pale comporte une partie inférieure et une partie supérieure rectiligne, inclinées par rapport à l'axe de rotation selon un angle d'ouverture Φ. Comme précédemment indiqué, l'angle d'ouverture adjacent de l'extrémité supérieure peut être différent de l'angle d'ouverture au niveau de l'extrémité inférieure. Sur la pale de la figure 8A, la partie équatoriale se limite à un point d'intersection entre les parties inférieure et supérieure.

Sur la figure 8B, chaque pale comporte une partie équatoriale plane, au niveau de laquelle le rayon est maximal. La partie équatoriale s'étend entre la partie inférieure et la partie supérieure, parallèlement à l'axe de rotation de la pale.

**Revendications**

1. Eolienne (1), de type Darrieus, comportant des turbines jumelles (10, 20) à flux transverse, reliées à une génératrice (30), la génératrice comportant un arbre configuré pour être entraîné en rotation sous l'effet d'une rotation des turbines, l'éolienne comportant :

   - une première turbine (10), mobile en rotation autour d'un premier axe de rotation ($\Delta_1$), la première turbine comportant plusieurs pales (11, 12, 13) réparties autour du premier axe de rotation ;
   - une deuxième turbine (20), mobile en rotation autour d'un deuxième axe de rotation ($\Delta_2$), la deuxième turbine comportant plusieurs pales (21, 22, 23) réparties autour du deuxième axe de rotation ;
   - le premier axe de rotation et le deuxième axe de rotation étant symétriques l'un de l'autre par rapport à un axe vertical (Z) ;

   l'éolienne étant telle que :

   - chaque turbine (10, 20) s'étend, autour d'un axe de rotation, entre une extrémité inférieure ($10_i$, $20_i$) et une extrémité supérieure ($10_s$, $20_s$), l'extrémité inférieure étant plus proche de la génératrice que ne l'est l'extrémité supérieure ;

- l'extrémité inférieure et l'extrémité supérieure de chaque turbine sont alignées sur l'axe de rotation de ladite turbine ;
- chaque pale d'une turbine comporte :

• une partie inférieure ($11_i$, $12_i$), s'étendant à partir de l'extrémité inférieure ($10_i$) ;
• une partie supérieure ($11_s$, $12_s$), s'étendant à partir de l'extrémité supérieure ($10_s$);

- chaque pale s'étendant, de l'extrémité inférieure vers l'extrémité supérieure, de telle sorte que:

• le long de la partie inférieure ($11_i$, $12_i$), lorsqu'une distance par rapport à l'extrémité inférieure ($10_i$) augmente, un rayon (r) de la pale, correspondant à une distance entre la pale et l'axe de rotation, augmente progressivement ;
• le long la partie supérieure ($11_s$), lorsqu'une distance par rapport à l'extrémité supérieure ($10_s$) diminue, le rayon de la pale diminue progressivement ;

l'éolienne étant **caractérisée en ce que** :

- le premier axe de rotation et le deuxième axe de rotation sont inclinés par rapport à l'axe vertical, selon un même angle d'inclinaison ($\alpha$) compris entre 25° et 50°;
- de telle sorte que chaque axe de rotation converge vers une unique génératrice, de façon que l'arbre de la génératrice, horizontal, soit entraîné en rotation par la première turbine et par la deuxième turbine ;
- l'éolienne définit un plan médian ($P_m$), le plan médian :

• étant perpendiculaire à un plan aval ($P_a$), le plan aval comportant le premier axe de rotation ($\Delta_1$) et le deuxième axe de rotation ($\Delta_2$);
• passant par un point d'intersection du premier axe de rotation et du deuxième axe de rotation ;

- le plan médian forme un plan de symétrie de l'éolienne.

2. Eolienne selon la revendication 1, dans laquelle, pour chaque pale (11, 12) :

- au niveau de l'extrémité inférieure, la partie inférieure ($11_i$, $12_i$) forme un angle d'ouverture inférieur ($\Phi$) avec l'axe de rotation ($\Delta_1$), l'angle d'ouverture inférieur étant aigu;
- au niveau de l'extrémité supérieure, la partie supérieure ($11_s$, $12_s$) forme un angle d'ouverture supérieur ($\Phi$) avec l'axe de rotation, l'angle d'ouverture supérieur étant aigu.

3. Eolienne selon la revendication 2, dans lequel l'angle d'ouverture inférieur et l'angle d'ouverture supérieur sont égaux et forment un même angle d'ouverture ($\Phi$).

4. Eolienne selon la revendication 3, dans lequel l'angle d'ouverture est compris entre 40° et 60°.

5. Eolienne selon l'une quelconque des revendications précédentes dans laquelle chaque pale est telle que la partie inférieure ($11_i$, $12_i$) est rectiligne et/ou la partie supérieure ($11_s$, $12_s$) est rectiligne.

6. Eolienne selon la revendication 5, dans laquelle :

- chaque pale comporte une partie équatoriale ($11_e$, $12_e$), reliant la partie inférieure et la partie supérieure ;
- dans la partie équatoriale ($11_e$, $12_e$), le rayon de la pale atteint un rayon maximal ($r_{max}$).

7. Eolienne selon la revendication 6, dans laquelle :

- la hauteur (h) de chaque pale correspond à une distance entre l'extrémité inférieure et l'extrémité supérieure, parallèlement à l'axe de rotation ;
- chaque pale présente un facteur de forme, correspondant à un ratio entre la hauteur de la pale et deux fois le rayon maximal de la pale ;
- le facteur de forme ($\delta$) de chaque pale est compris entre 1,3 et 1,5.

8. Eolienne selon la revendication 7, dans laquelle, pour chaque pale :

- la partie équatoriale est courbe ($11_e$, $12_e$);
- le long de la partie équatoriale, à partir de la partie inférieure ($11_i$, $12_i$), le rayon augmente progressivement, jusqu'à atteindre le rayon maximal ($r_{max}$) de la pale, puis diminue progressivement, jusqu'à la partie supérieure ($11_s$, $12_s$).

9. Eolienne selon la revendication 8, dans laquelle chaque pale comporte :

- une jonction inférieure ($11_{ei}$), correspondant à une jonction entre la partie inférieure et la partie équatoriale ;
- une jonction supérieure ($11_{es}$), correspondant à une jonction entre la partie supérieure et la partie équatoriale ;

chaque pale étant telle que :

- la distance entre la jonction inférieure et la jonction supérieure, parallèlement à l'axe -de rotation, forme une hauteur de la partie équatoriale ($h_e$);
- une hauteur relative de la partie équatoriale ($\Gamma$) correspond à un ratio entre la hauteur de la partie équatoriale et la hauteur de la pale ($h$);
- la hauteur relative ($\Gamma$) de chaque pale est supérieure à 0.5 et inférieure à 0.8.

10. Eolienne selon l'une quelconque des revendications 6 à 9, dans laquelle :

   - deux pales appartenant à deux turbines différentes sont, au cours de leur rotation autour de leurs axes de rotation respectifs, écartées d'un écartement minimal ($U$) ;
   - un facteur de forme de l'éolienne ($\Lambda$) correspond à un ratio entre l'écartement minimal et deux fois le rayon maximal ;
   - le facteur de forme de l'éolienne est compris entre 0.1 et 0.3.

11. Eolienne selon l'une quelconque des revendications précédentes, dans laquelle chaque turbine comporte deux ou trois pales, régulièrement réparties autour de l'axe de rotation de la turbine.

12. Eolienne selon l'une quelconque des revendications précédentes, dans laquelle :

   - la première turbine (10) est reliée :

      • au niveau de son extrémité inférieure ($10_i$) , à un premier arbre de rotation inférieur ($A_{i,1}$) ;
      • au niveau de son extrémité supérieure ($10_s$), à un premier arbre de rotation supérieur ($A_{s,1}$) ;
      • le premier arbre de rotation inférieur, le premier arbre de rotation supérieur et le premier axe de rotation ($\Delta_1$) étant coaxiaux ;

   - la deuxième turbine (20) est reliée :

      • au niveau de son extrémité inférieure ($20_i$), à un deuxième arbre de rotation inférieur ($A_{i,2}$);
      • au niveau de son extrémité supérieure ($20_s$), à un deuxième arbre de rotation supérieur ($A_{s,2}$);
      • le deuxième arbre de rotation inférieur, le deuxième arbre de rotation supérieur et le deuxième axe de rotation étant coaxiaux ;

   - l'éolienne comporte une structure de maintien (50), la structure de maintien comportant :

      • une nacelle (40), supportant la génératrice ;
      • un mât ($50_i$), s'étendant verticalement à partir de la nacelle (40), le mât étant centré par rapport au plan médian, le mât étant décalé par rapport au plan aval, d'une distance de recul ($d$), selon une direction longitudinale perpendiculaire au plan aval;
      • un premier bras supérieur (51) s'étendant à partir du mât ($50_i$), jusqu'à un premier support supérieur ($51_s$), le premier support supérieur maintenant le premier arbre de rotation supérieur ;
      • un deuxième bras supérieur (52) s'étendant à partir du mât ($50_i$), jusqu'à un deuxième support supérieur ($52_s$), le deuxième support supérieur maintenant le deuxième arbre de rotation supérieur ;
      • le premier bras supérieur et le deuxième bras supérieur étant inclinés par rapport à un axe vertical.

13. Eolienne selon la revendication 12, dans laquelle la structure de maintien comporte également

   - un poinçon (53), s'étendant à partir du mât, en s'éloignant du plan aval ;
   - un premier hauban (54), s'étendant entre le poinçon et le premier bras supérieur ;
   - un deuxième hauban (55), s'étendant entre le poinçon et le deuxième bras supérieur.

14. Eolienne selon l'une quelconque des revendications 12 ou 13, dans laquelle la nacelle est mobile en rotation, autour d'un axe de rotation vertical ($O$), autour duquel s'étend le mat ($50_i$), de telle sorte que sous l'effet d'un vent, soufflant selon une direction ($W$), les turbines se placent spontanément en aval du mât, selon ladite direction, sous l'effet d'une poussée exercée par le vent sur chaque turbine.

15. Eolienne selon l'une quelconque des revendications 12 à 14, dans lequel chaque arbre de rotation inférieur ($A_{i,1}$, $A_{i,2}$) est relié à l'arbre de la génératrice (30) par un renvoi d'angle (32).

**Patentansprüche**

1. Windkraftanlage (1) vom Typ Darrieus, aufweisend Zwillings-Querstromturbinen (10, 20), die mit einem Generator (30) verbunden sind, wobei der Generator eine Welle aufweist, die dazu ausgebildet ist, unter der Wirkung einer Drehung der Turbinen drehangetrieben zu werden, wobei die Windkraftanlage Folgendes aufweist:

   - eine erste Turbine (10), die um eine erste

Drehachse ($\Delta_1$) drehbeweglich ist, wobei die erste Turbine mehrere Blätter (11, 12, 13) aufweist, die um die erste Drehachse verteilt sind;
- eine zweite Turbine (20), die um eine zweite Drehachse ($\Delta_2$) drehbeweglich ist, wobei die zweite Turbine mehrere Blätter (21, 22, 23) aufweist, die um die zweite Drehachse verteilt sind;
- wobei die erste Drehachse und die zweite Drehachse bezogen auf eine Vertikalachse (Z) zueinander symmetrisch sind;

wobei die Windkraftanlage so beschaffen ist, dass:

- sich jede Turbine (10, 20) um eine Drehachse zwischen einem unteren Ende ($10_i$, $20_i$) und einem oberen Ende ($10_s$, $20_s$) erstreckt, wobei das untere Ende näher an dem Generator ist als das obere Ende;
- das untere Ende und das obere Ende jeder Turbine sich auf der Drehachse der Turbine auf einer Linie befinden;
- jedes Blatt einer Turbine Folgendes aufweist:

• einen unteren Abschnitt ($11_i$, $12_i$), der sich von dem unteren Ende ($10_i$) erstreckt;
• einen oberen Abschnitt ($11_s$, $12_s$), der sich von dem oberen Ende ($10_s$) erstreckt;

- wobei sich jedes Blatt so vom unteren Ende in Richtung des oberen Endes erstreckt, dass:

• entlang des unteren Abschnitts ($11_i$, $12_i$), wenn ein Abstand zum unteren Ende ($10_i$) zunimmt, ein Radius (r) des Blatts, der einem Abstand zwischen dem Blatt und der Drehachse entspricht, allmählich zunimmt;
• entlang des oberen Abschnitts ($11_s$), wenn ein Abstand zum oberen Ende ($10_s$) abnimmt, der Radius des Blatts allmählich abnimmt;

wobei die Windkraftanlage **dadurch gekennzeichnet ist, dass**:

- die erste Drehachse und die zweite Drehachse um ein und denselben Neigungswinkel ($\alpha$) zwischen 25° und 50° bezogen auf die Vertikalachse geneigt sind;
- so dass jede Drehachse in Richtung eines einzigen Generators hin verläuft, damit die horizontale Welle des Generators von der ersten Turbine und der zweiten Turbine drehangetrieben wird;
- die Windkraftanlage eine Mittelebene ($P_m$) definiert, wobei die Mittelebene:

• senkrecht zu einer stromabwärtigen Ebene ($P_a$) verläuft, wobei die stromabwärtige Ebene die erste Drehachse ($\Delta_1$) und die zweite Drehachse ($\Delta_2$) aufweist;
• durch einen Schnittpunkt der ersten Drehachse und der zweiten Drehachse verläuft;

- die Mittelebene eine Symmetrieebene der Windkraftanlage bildet.

2.  Windkraftanlage nach Anspruch 1, wobei für jedes Blatt (11, 12):

- im Bereich des unteren Endes der untere Abschnitt ($11_i$, $12_i$) einen unteren Öffnungswinkel ($\Phi$) mit der Drehachse ($\Delta_1$) bildet, wobei der untere Öffnungswinkel spitz ist;
- im Bereich des oberen Endes der obere Abschnitt ($11_s$, $12_s$) einen oberen Öffnungswinkel ($\Phi$) mit der Drehachse bildet, wobei der obere Öffnungswinkel spitz ist.

3.  Windkraftanlage nach Anspruch 2, wobei der untere Öffnungswinkel und der obere Öffnungswinkel gleich sind und ein und denselben Öffnungswinkel ($\Phi$) bilden.

4.  Windkraftanlage nach Anspruch 3, wobei der Öffnungswinkel zwischen 40° und 60° beträgt.

5.  Windkraftanlage nach einem der vorhergehenden Ansprüche, wobei jedes Blatt so beschaffen ist, dass der untere Abschnitt ($11_i$, $12_i$) geradlinig ist und/oder der obere Abschnitt ($11_s$, $12_s$) geradlinig ist.

6.  Windkraftanlage nach Anspruch 5, wobei:

- jedes Blatt einen Äquatorialabschnitt ($11_e$, $12_e$) aufweist, der den unteren Abschnitt und den oberen Abschnitt verbindet;
- in dem Äquatorialabschnitt ($11_e$, $12_e$) der Radius des Blatts einen maximalen Radius ($r_{max}$) erreicht.

7.  Windkraftanlage nach Anspruch 6, wobei:

- die Höhe (h) jedes Blatts einem Abstand zwischen dem unteren Ende und dem oberen Ende parallel zur Drehachse entspricht;
- jedes Blatt einen Formfaktor aufweist, der einem Verhältnis zwischen der Höhe des Blatts und dem Zweifachen des maximalen Radius des Blatts entspricht;
- der Formfaktor ($\delta$) jedes Blatts zwischen 1,3 und 1,5 beträgt.

8.  Windkraftanlage nach Anspruch 7, wobei für jedes Blatt:

- der Äquatorialabschnitt gekrümmt ist ($11_e$,

$12_e$);
- der Radius entlang des Äquatorialabschnitts ausgehend von dem unteren Abschnitt ($11_i$, $12_i$) allmählich zunimmt, bis er den maximalen Radius ($r_{max}$) des Blatts erreicht, dann bis zum oberen Abschnitt ($11_s$, $12_s$) allmählich abnimmt.

9. Windkraftanlage nach Anspruch 8, wobei jedes Blatt Folgendes aufweist:

- eine untere Verbindung ($11_{ei}$), die einer Verbindung zwischen dem unteren Abschnitt und dem Äquatorialabschnitt entspricht;
- eine obere Verbindung ($11_{es}$), die einer Verbindung zwischen dem oberen Abschnitt und dem Äquatorialabschnitt entspricht;

wobei jedes Blatt so beschaffen ist, dass:

- der Abstand zwischen der unteren Verbindung und der oberen Verbindung parallel zur Drehachse eine Höhe des Äquatorialabschnitts ($h_e$) bildet;
- eine relative Höhe des Äquatorialabschnitts ($\Gamma$) einem Verhältnis zwischen der Höhe des Äquatorialabschnitts und der Höhe des Blatts (h) entspricht;
- die relative Höhe ($\Gamma$) jedes Blatts größer als 0,5 und kleiner als 0,8 ist.

10. Windkraftanlage nach einem der Ansprüche 6 bis 9, wobei:

- zwei Blätter, die zu zwei verschiedenen Turbinen gehören, im Verlauf ihrer Drehung um ihre jeweiligen Drehachsen um einen Mindestabstand (U) beabstandet sind;
- ein Formfaktor der Windkraftanlage ($\Lambda$) einem Verhältnis zwischen dem Mindestabstand und dem Zweifachen des maximalen Radius entspricht;
- der Formfaktor der Windkraftanlage zwischen 0,1 und 0,3 beträgt.

11. Windkraftanlage nach einem der vorhergehenden Ansprüche, wobei jede Turbine zwei oder drei Blätter aufweist, die gleichmäßig um die Drehachse der Turbine verteilt sind.

12. Windkraftanlage nach einem der vorhergehenden Ansprüche, wobei:

- die erste Turbine (10) wie folgt verbunden ist:

• im Bereich ihres unteren Endes ($10_i$) mit einer ersten unteren Drehwelle ($A_{i,1}$);
• im Bereich ihres oberen Endes ($10_s$) mit einer ersten oberen Drehwelle ($A_{s,1}$);

• wobei die erste untere Drehwelle, die erste obere Drehwelle und die erste Drehachse ($\Delta_1$) koaxial verlaufen;

- die zweite Turbine (20) wie folgt verbunden ist:

• im Bereich ihres unteren Endes ($20_i$) mit einer zweiten unteren Drehwelle ($A_{i,2}$);
• im Bereich ihres oberen Endes ($20_s$) mit einer zweiten oberen Drehwelle ($A_{s,2}$);
• wobei die zweite untere Drehwelle, die zweite obere Drehwelle und die zweite Drehachse koaxial verlaufen;

- die Windkraftanlage eine Haltestruktur (50) aufweist, wobei die Haltestruktur Folgendes aufweist:

• eine Gondel (40), die den Generator trägt;
• einen Mast ($50_i$), der sich von der Gondel (40) vertikal erstreckt, wobei der Mast im Verhältnis zur Mittelebene zentriert ist, wobei der Mast im Verhältnis zur stromabwärtigen Ebene in einer Längsrichtung senkrecht zur stromabwärtigen Ebene um einen Rücksetzabstand (d) versetzt ist;
• einen ersten Oberarm (51), der sich von dem Mast ($50_i$) bis zu einem ersten oberen Träger ($51_s$) erstreckt, wobei der erste obere Träger die erste obere Drehwelle hält;
• einen zweiten Oberarm (52), der sich von dem Mast ($50_i$) bis zu einem zweiten oberen Träger ($52_s$) erstreckt, wobei der zweite obere Träger die zweite obere Drehwelle hält;
• wobei der erste Oberarm und der zweite Oberarm im Verhältnis zu einer Vertikalachse geneigt sind.

13. Windkraftanlage nach Anspruch 12, wobei die Haltestruktur ebenfalls Folgendes aufweist

- einen Stiel (53), der sich vom Mast weg von der stromabwärtigen Ebene erstreckt;
- eine erste Strebe (54), die sich zwischen dem Stiel und dem ersten Oberarm erstreckt;
- eine zweite Strebe (55), die sich zwischen dem Stiel und dem zweiten Oberarm erstreckt.

14. Windkraftanlage nach einem der Ansprüche 12 oder 13, wobei die Gondel um eine vertikale Drehachse (O) drehbeweglich ist, um welche sich der Mast ($50_i$) erstreckt, so dass sich die Turbinen unter der Wirkung eines Windes, der in einer Richtung (W) bläst, in der Richtung unter der Wirkung eines Schubs, der vom Wind auf jede Turbine ausgeübt wird, spontan stromab des Masts platzieren.

**15.** Windkraftanlage nach einem der Ansprüche 12 bis 14, wobei jede untere Drehwelle ($A_{i,1}$, $A_{i,2}$) durch eine Winkelumlenkung (32) mit der Welle des Generators (30) verbunden ist.

## Claims

**1.** A Darrieus wind turbine (1) comprising twin cross-flow turbines (10, 20) connected to a generator (30), the generator comprising a shaft designed to be driven in rotation under the effect of a rotation of the turbines, the wind turbine comprising:

- a first turbine (10) movable in rotation about a first rotation axis ($\Delta_1$), the first turbine comprising several blades (11, 12, 13) distributed about the first rotation axis,
- a second turbine (20) movable in rotation about a second rotation axis ($\Delta_2$), the second turbine comprising several blades (21, 22, 23) distributed about the second rotation axis,
- the first rotation axis and the second rotation axis being symmetrical to each other with respect to a vertical axis (Z),

the wind turbine being such that:

- each turbine (10, 20) extends about a rotation axis between a lower end ($10_i$, $20_i$) and an upper end ($10_s$, $20_s$), the lower end being closer to the generator than the upper end,
- the lower end and the upper end of each turbine are aligned with the rotation axis of said turbine,
- each turbine blade comprises:

  • a lower portion ($11_i$, $12_i$), extending from the lower end ($10_i$),
  • an upper portion ($11_s$, $12_s$), extending from the upper end ($10_s$),

- each blade extending from the lower end towards the upper end so that:

  • the radius (r) of the blade corresponding to the distance between the blade and the rotation axis along the lower portion ($11_i$, $12_i$) gradually increases as the distance from the lower end ($10_i$) increases,
  • the radius of the blade gradually decreases along the upper portion ($11_s$) as the distance from the upper end ($10_s$) decreases,

the wind turbine being **characterized in that**:

- the first rotation axis and the second rotation axis are inclined with respect to the vertical axis at the same angle of inclination ($\alpha$) of between 25° and 50°,
- so that each rotation axis converges on a single generator, so that the horizontal shaft of the generator is driven in rotation by the first turbine and by the second turbine,
- the wind turbine defines a median plane ($P_m$), the median plane:

  • being perpendicular to a downstream plane ($P_a$), the downstream plane containing the first rotation axis ($\Delta_1$) and the second rotation axis ($\Delta_2$),
  • passing through a point of intersection of the first rotation axis and the second rotation axis,

- The median plane forms a plane of symmetry of the wind turbine.

**2.** The wind turbine as claimed in claim 1, in which, for each blade (11, 12):

- at the lower end, the lower portion ($11_i$, $12_i$) forms a lower opening angle ($\phi$) with the rotation axis ($\Delta_1$), the lower opening angle being acute,
- at the upper end, the upper portion ($11_s$, $12_s$) forms an upper opening angle ($\phi$) with the rotation axis, the upper opening angle being acute.

**3.** The wind turbine as claimed in claim 2, in which the lower opening angle and the upper opening angle are equal and form the same opening angle ($\phi$).

**4.** The wind turbine as claimed in Claim 3, in which the opening angle is between 40° and 60°.

**5.** The wind turbine as claimed in any of the preceding claims, in which each blade is such that the lower portion ($11_i$, $12_i$) is straight and/or the upper portion ($11_s$, $12_s$) is straight.

**6.** The wind turbine as claimed in Claim 5, in which:

- each blade has an equatorial portion ($11_e$, $12_e$), connecting the lower portion and the upper portion,
- in the equatorial portion ($11_e$, $12_e$), the radius of the blade reaches a maximum radius ($r_{max}$).

**7.** The wind turbine as claimed in Claim 6, in which:

- the height (h) of each blade corresponds to the distance between the lower end and the upper end, parallel to the rotation axis,
- each blade has a form factor, corresponding to a ratio between the height of the blade and twice the maximum radius of the blade,

- the form factor ($\delta$) of each blade is between 1.3 and 1.5.

8. The wind turbine as claimed in claim 7, in which for each blade:

- the equatorial portion ($11_e$, $12_e$) is curved,
- along the equatorial portion, from the lower portion ($11_i$, $12_i$), the radius gradually increases to the maximum radius ($r_{max}$) of the blade, then gradually decreases, up to the upper portion ($11_s$, $12_s$).

9. The wind turbine as claimed in claim 8, in which each blade comprises:

- a lower join ($11_{ei}$), corresponding to a join between the lower portion and the equatorial portion,
- an upper join ($11_{es}$), corresponding to a join between the upper portion and the equatorial portion,

each blade being such that:

- the distance between the lower join and the upper join, parallel to the rotation axis, forms the height of the equatorial portion ($h_e$),
- a relative height of the equatorial portion ($\Gamma$) corresponds to a ratio between the height of the equatorial portion and the height of the blade ($h$),
- the relative height ($\Gamma$) of each blade is greater than 0.5 and less than 0.8.

10. The wind turbine as claimed in any one of claims 6 to 9, in which:

- two blades belonging to two different turbines are separated by a minimum gap ($U$) during rotation about the respective rotation axes,
- a form factor ($\Lambda$) of the wind turbine corresponds to a ratio between the minimum gap and twice the maximum radius,
- the form factor of the wind turbine is between 0.1 and 0.3.

11. The wind turbine as claimed in any one of the preceding claims, in which each turbine (10, 20) comprises two or three blades, each blade being symmetrical to the other with respect to the rotation axis ($\Delta_1$, $\Delta_2$) of the turbine.

12. The wind turbine as claimed in any one of the preceding claims, in which:

- the first turbine (10) is connected:

  • at the lower end ($10_i$) thereof to a first lower rotary shaft ($A_{i,1}$),
  • at the upper end ($10_s$) thereof to a first upper rotary shaft ($A_{s,1}$),
  • the first lower rotary shaft, the first upper rotary shaft and the first rotation axis ($\Delta_1$) being coaxial,

- the second turbine (20) is connected:

  • at the lower end ($20_i$) thereof to a second lower rotary shaft ($A_{i,2}$),
  • at the upper end ($20_s$) thereof to a second upper rotary shaft ($A_{s,2}$),
  • the second lower rotary shaft, the second upper rotary shaft and the second rotation axis being coaxial,

- the wind turbine comprises a holding structure (50), the holding structure comprising:

  • a nacelle (40) supporting the generator,
  • a mast ($50_i$) extending vertically from the nacelle (40), the mast being centered with respect to the median plane, the mast being set back from the downstream plane by a setback distance (d) in a longitudinal direction perpendicular to the downstream plane,
  • a first upper arm (51) extending from the mast ($50_i$) to a first upper support ($51_s$), the first upper support holding the first upper rotary shaft,
  • a second upper arm (52) extending from the mast ($50_i$) to a second upper support ($52_s$), the second upper support holding the second upper rotary shaft,
  • the first upper arm and the second upper arm being inclined with respect to a vertical axis.

13. The wind turbine as claimed in claim 12, in which the holding structure also comprises

- a king post (53) extending from the mast away from the downstream plane,
- a first brace (54) extending between the king post and the first upper arm,
- a second brace (55), extending between the king post and the second upper arm.

14. The wind turbine as claimed in any one of claims 12 or 13, in which the nacelle is movable in rotation about a vertical rotation axis (O), about which the mast ($50_i$) extends, so that the wind blowing in a direction (W) spontaneously positions the turbines downstream of the mast, in said direction, under the effect of the thrust exerted by the wind on each turbine.

**15.** The wind turbine as claimed in any one of claims 12 to 14, in which each lower rotary shaft ($A_{i,1}$, $A_{i,2}$) is connected to the shaft of the generator (30) by an angle transmission (32).

**Fig. 1A**

**Fig. 1B**

**Fig. 1C**

**Fig. 2A**

**Fig 2B**

**Fig 2C**

**Fig 3A**

**Fig 3B**

**Fig 3C**

**Fig 3D**

**Fig. 4**

**Fig 5A**

**Fig. 5B**

**Fig. 5C**

**Fig. 5D**

EP 4 295 033 B1

**Fig. 5E**

34

**Fig. 5F**

**Fig. 6A**

**Fig. 6B**

**Fig. 6C**

**Fig. 6D**

**Fig. 6E**

10

$A_{r,1}$   30 $A_{r,2}$   20

31   32   62

40   60

**Fig. 7A**

20

35   38

34   37

36

$A_{r,2}$   33

32

**Fig. 7B**

Fig. 8A

Fig. 8B

**EP 4 295 033 B1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- JP 59190482 B
- FR 2973843
- US 7189051 B
- US 20200217297 A
- WO 2017153676 A

**Littérature non-brevet citée dans la description**

- **W.TJIU** ; **T. MARNOTO** ; **S.MAT** ; **M. H.RUSLAN** ; **K.SOPIAN**. Darrieus vertical axis wind turbine for power generation I: Assessment of Darrieus VAWT configurations. *Renewable Energy*, 2015, vol. 75, 50-67